# EUROPEAN PATENT APPLICATION

(11) **EP 4 615 001 A1**
(43) Date of publication of application: **10.09.2025**
(21) Application number: 23947335.8
(22) Date of filing: 10.11.2023
(51) Int. Cl.: H04R 1/10

(54) **EARPHONE**

(30) Priority: 28.07.2023 CN 202310956970
(71) Applicant: Shenzhen Shokz Co., Ltd., Shenzhen, Guangdong 518108 (CN)
(72) Inventor: ZHENG, Zeying, Shenzhen, Guangdong 518108 (CN); YAN, Zeteng, Shenzhen, Guangdong 518108 (CN); XU, Jiang, Shenzhen, Guangdong 518108 (CN); ZHAO, Tao, Shenzhen, Guangdong 518108 (CN); LI, Yongjian, Shenzhen, Guangdong 518108 (CN); ZHANG, Haofeng, Shenzhen, Guangdong 518108 (CN); ZHONG, Lei, Shenzhen, Guangdong 518108 (CN); HAN, Ruixin, Shenzhen, Guangdong 518108 (CN); CHEN, Yunbin, Shenzhen, Guangdong 518108 (CN); WANG, Chong, Shenzhen, Guangdong 518108 (CN)
(74) Representative: Wang, Bo
(86) International application number: PCT/CN2023/131099
(87) International publication number: WO 2025/025397

(57) **Abstract**

The present disclosure provides an earphone. The earphone includes a host module and an ear hook. The ear hook includes a first end and a second end disposed opposite to each other, and the first end is connected to the host module. The ear hook is configured to be hooked on a user's ear. The ear hook includes an elastic framework, a covering member, and a fixing block. The elastic framework extends along an extension direction from the first end to the second end. The covering member includes a front covering section and a rear covering section. The front covering section and the rear covering section are connected to each other along the extension direction. The fixing block is disposed at one end of the elastic framework away from the first end. The front covering section covers the elastic framework and the fixing block. The rear covering section does not cover the elastic framework and the fixing block, and is located downstream to the fixing block along the extension direction. An extension length of the rear covering section along the extension direction is greater than or equal to an extension length of the fixing block along the extension direction.

## Description

### CROSS-REFERENCE TO RELATED APPLICATION

This application claims priority to Chinese Patent Application No. 202310956970.8, filed on July 28, 2023, titled "EARPHONES," the contents of which are entirely incorporated herein by reference.

### TECHNICAL FIELD

The present disclosure relates to the technical field of electronic devices, and in particular, to earphones.

### BACKGROUND

With the increasing popularity of electronic devices, the electronic devices have become indispensable social and entertainment tools in people's daily lives, and people's requirements for the electronic devices are also increasing. The electronic devices (e.g., earphones, smart glasses) have also been widely used in people's daily life, which can be used in conjunction with terminal devices (e.g., mobile phones, computers, etc.) to provide users with an auditory feast. However, when an existing earphone is worn, a portion of the existing earphone that hangs on a human ear has a poor elasticity, which has an adverse effect on the user's wear experience.

### SUMMARY

The present disclosure provides an earphone. The earphone includes a host module and an ear hook. The ear hook includes a first end and a second end disposed opposite to each other, and the first end is connected to the host module. The ear hook is configured to be hooked on a user's ear. The ear hook includes an elastic framework, a covering member, and a fixing block. The elastic framework extends along an extension direction from the first end to the second end. The covering member includes a front covering section and a rear covering section. The front covering section and the rear covering section are connected to each other along the extension direction. The fixing block is disposed at one end of the elastic framework away from the first end. The front covering section covers the elastic framework and the fixing block. The rear covering section does not cover the elastic framework and the fixing block, and is located downstream to the fixing block along the extension direction. An extension length of the rear covering section along the extension direction is greater than or equal to an extension length of the fixing block along the extension direction. By disposing the elastic framework, the elasticity of the ear hook can be improved. By disposing the fixing block, the elastic framework can be prevented from puncturing the covering member, which facilitates processing and molding, and effectively improves the processing accuracy.

In some embodiments, the extension length of the rear covering section along the extension direction is within a range from 10 millimeters (mm) to 25 mm; and/or an extension length of the front covering section along the extension direction is within a range from 35 mm to 80 mm; and/or the extension length of the fixing block along the extension direction is within a range from 6 mm to 15 mm.

In some embodiments, a ratio of the extension length of the front covering section along the extension direction to the extension length of the rear covering section along the extension direction is greater than or equal to 2, and less than or equal to 4.5.

In some embodiments, the end of the elastic framework away from the first end is inserted into the fixing block.

In some embodiments, a junction between an end surface of the fixing block facing the rear covering section and a circumferential surface of the fixing block is chamfered or formed as a curved surface.

In some embodiments, at least one of the front covering section or the rear covering section is provided with a first positioning hole, and the fixing block is exposed through the first positioning hole.

In some embodiments, the first positioning hole is disposed on a circumferential side of the at least one of the front covering section or the rear covering section, the circumferential side of the at least one of the front covering section or the rear covering section is further provided with a recess, the first positioning hole being disposed on a recess bottom of the recess.

In some embodiments, the first positioning hole is disposed at an end of the recess, and another end of the recess extends in a direction approaching the second end.

In some embodiments, the host module has a length direction, a width direction, and a thickness direction perpendicular to each other, the host module is stacked on the ear along the thickness direction in a wearing state, and the first positioning hole extends along the thickness direction; and/or the fixing block is provided with a second positioning hole, and the first positioning hole and the second positioning hole are disposed opposite to each other and connected.

In some embodiments, the first positioning hole is set as a blind hole, which facilitates the processing and demolding, leads to an aesthetic appearance, and has little effect on a strength of a fixing member.

In some embodiments, the first positioning hole is disposed on a side of the earphone close to the ear when the earphone is worn. This can make the appearance of the earphone neater and less prone to hiding dirt, which affects the aesthetic appearance.

In some embodiments, the earphone further includes a functional member detachably connected to the first positioning hole. The functional member may be a lanyard connecting two earphones, etc.

In some embodiments, a hardness of the fixing block is greater than a hardness of the covering member; and/or, the front covering section and the rear covering section are integrally molded, and the front covering section is integrally molded over the elastic framework and the fixing block to cover their outer peripheries.

In some embodiments, the host module includes a connection end connected to the first end of the ear hook and a free end away from the connection end, and at least a portion of the rear covering section is disposed opposite to the free end.

In some embodiments, the host module has a length direction, a width direction, and a thickness direction perpendicular to each other, the host module is stacked on the ear along the thickness direction in a wearing state, and a size of the rear covering section along the width direction is greater than a size of the host module along the width direction.

In some embodiments, in the wearing state, the host module has an inner surface, an outer surface, an upper surface, and a lower surface. The inner surface faces the ear along the thickness direction, the outer surface is away from the ear along the thickness direction, the upper surface and the lower surface are connected to the inner surface and the outer surface, the upper surface and the lower surface are spaced apart in the width direction; the second end is located at the rear covering section, and the rear covering section extends across the lower surface in the width direction.

In some embodiments, at least a portion of the fixing block is located between an extension plane of the upper surface and an extension plane of the lower surface, and an extension length of the fixing block along the extension direction of the ear hook is within a range from 6 mm to 15 mm. In this way, a relatively great arm of force can be formed in the length direction of the host module and a length of a titanium wire can be saved, thereby reserving space for other parts, such as the covering member (e.g., the rear covering section), etc.

In some embodiments, the rear covering section is provided with a buffer cavity, and at least a portion of the buffer cavity is located in a portion of the rear covering section disposed opposite to the free end.

In some embodiments, the free end extends into a concha cavity of the ear in a wearing state, the free end and the rear covering section are disposed to jointly clamp an ear region from a front side and a rear side of the ear region corresponding to the concha cavity in the wearing state, and the buffer cavity is located in a portion of the rear covering section for clamping the ear region.

In some embodiments, the buffer cavity is configured as an elongated through-hole or a recess, and a ratio of an extension length of the buffer cavity along the extension direction to the extension length of the rear covering section along the extension direction is greater than or equal to 1/2 and less than or equal to 4/5. In this way, the ear hook is easily deformed to improve comfort, thereby realizing a tactile recognition through the recess when taking off and wearing the earphone.

In some embodiments, the ear hook further includes a connector fixedly disposed at an end of the elastic framework close to the first end, and the connector is connected and fixed to the host module. An extension length of the connector along the extension direction is greater than the extension length of the fixing block along the extension direction.

In some embodiments, the elastic framework is inserted into the connector, and a circumferential side of the connector is provided with a third positioning hole. The host module has a length direction, a width direction, and a thickness direction perpendicular to each other, and the host module is used to be stacked on the ear in the thickness direction in a wearing state. The third positioning hole extends along the thickness direction.

In some embodiments, the host module has a length direction, a width direction, and a thickness direction perpendicular to each other, the host module is stacked on the ear along the thickness direction in a wearing state. An extension direction of one end of the elastic framework close to the first end and the length direction has a first angle facing the ear hook, and an extension direction of the connector and the length direction has a second angle facing the ear hook. The first angle is less than the second angle, the first angle is within a range from 70 degrees to 110 degrees, and the second angle is within a range from 90 degrees to 130 degrees.

### BRIEF DESCRIPTION OF THE DRAWINGS

In order to more clearly illustrate the technical solutions in the embodiments of the present disclosure or the prior art, the following will briefly introduce the drawings that need to be used in the description of the embodiments or the prior art. Obviously, the accompanying drawings in the following description are merely some embodiments of the present disclosure. For those of ordinary skill in the art, other drawings may also be obtained according to these drawings without creative work.
FIG. 1 is a schematic diagram illustrating an exemplary anterior side profile of an ear of a user according to some embodiments of the present disclosure;
FIG. 2 is a schematic diagram illustrating an exemplary overall structure of an earphone according to some embodiments of the present disclosure;
FIG. 3 is a schematic diagram illustrating an exemplary internal structure of an earphone according to some embodiments of the present disclosure;
FIG. 4 is a schematic diagram illustrating an exemplary structure of a first housing of an earphone according to some embodiments of the present disclosure;
FIG. 5 is a schematic diagram illustrating an exemplary sectional structure of the earphone shown in FIG. 2 along a direction of A-A;
FIG. 6 is a schematic diagram illustrating an exemplary structure of an earphone under a perspective according to some embodiments of the present disclosure;
FIG. 7 is a schematic diagram illustrating an exemplary structure of a charging case for use in conjunction with an earphone according to some embodiments of the present disclosure;
FIG. 8 is a schematic diagram illustrating an exemplary three-dimensional structure of an earphone according to some embodiments of the present disclosure;
FIG. 9 is a schematic diagram illustrating a side view of the earphone shown in FIG. 8;
FIG. 10 is a schematic diagram illustrating a bottom view of the earphone shown in FIG. 8;
FIG. 11a is a schematic diagram illustrating an exemplary structure of an ear hook shown in FIG. 8;
FIG. 11b is a schematic diagram illustrating another exemplary structure of the ear hook shown in FIG. 8;
FIG.12 is a schematic diagram illustrating an exemplary structure of an elastic framework shown in FIG. 8;
FIG. 13 is a schematic diagram illustrating another exemplary three-dimensional structure of an earphone according to some embodiments of the present disclosure;
FIG. 14 is a schematic diagram illustrating another exemplary three-dimensional structure of an earphone according to some embodiments of the present disclosure;
FIG. 15a is a schematic diagram illustrating an exemplary sectional structure of an earphone along a section line V-V shown in FIG. 10;
FIG. 15b is a schematic diagram illustrating another exemplary sectional structure of the earphone along the section line V-V shown in FIG. 10;
FIG. 16 is a schematic diagram illustrating an exemplary three-dimensional structure of an earphone according to some embodiments of the present disclosure;
FIG.17 is a schematic diagram illustrating an exemplary cross section P-P of the earphone shown in FIG.16;
FIG. 18 is a schematic diagram illustrating another exemplary three-dimensional structure of an earphone according to some embodiments of the present disclosure;
FIG. 19 is a schematic diagram illustrating a side view of the earphone shown in FIG. 18;
FIG. 20 is a schematic diagram illustrating another exemplary three-dimensional structure of an earphone according to some embodiments of the present disclosure;
FIG. 21 is a schematic diagram illustrating an exemplary three-dimensional structure of an earphone according to some embodiments of the present disclosure;
FIG. 22 is a schematic diagram illustrating an exemplary structure of a top view of the earphone shown in FIG. 21;
FIG. 23 is a schematic diagram illustrating an exemplary structure of a side view of an ear hook shown in FIG. 21;
FIG. 24 is a schematic diagram illustrating an exemplary assembly structure of an elastic framework, a fixing block, and a connector of an earphone according to some embodiments of the present disclosure;
FIG. 25 is a schematic diagram illustrating an exemplary three-dimensional structure of the ear hook shown in FIG. 21;
FIG. 26 is a schematic diagram illustrating an exemplary structure of a top view of an earphone according to another embodiment of the present disclosure;
FIG. 27 is a schematic diagram illustrating an exemplary circuit structure of an electronic device according to some embodiments of the present disclosure;
FIG. 28 is a schematic diagram illustrating an exemplary circuit structure of an interface circuit according to some embodiments of the present disclosure; and
FIG. 29 is a schematic diagram illustrating another exemplary structure of an interface circuit according to some embodiments of the present disclosure.

### DETAILED DESCRIPTION

The following will clearly and completely describe the technical solutions in the embodiments of the present disclosure with reference to the accompanying drawings in the embodiments of the present disclosure. Obviously, the described embodiments are only a part of the embodiments of the present disclosure, and not all of them. Based on the embodiments of the present disclosure, all other embodiments obtained by persons of ordinary skill in the art without making creative efforts belong to the scope of protection of the present disclosure.

Reference herein to the term "embodiment" means that a particular feature, structure, or characteristic described in connection with the embodiment can be included in at least one embodiment of the present disclosure. The occurrences of the term in various places in the present disclosure are not necessarily all referring to the same embodiment, nor are separate or alternative embodiments mutually exclusive of other embodiments. It is understood explicitly and implicitly by those skilled in the art that the embodiments described herein can be combined with other embodiments.

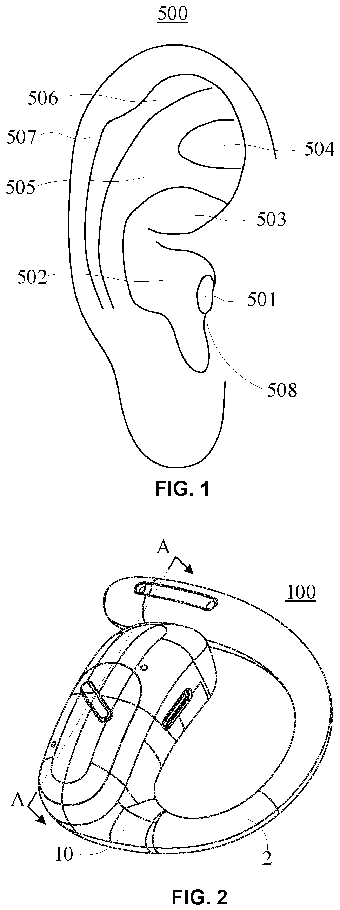

Referring to FIG. 1, an ear 500 of a user may include physiological parts, such as an external ear canal 501, a concha cavity 502, a cymba conchae 503, a triangular fossa 504, an antihelix 505, a scapha 506, a helix 507, a tragus 508, etc. Although the external ear canal 501 has a certain depth and extends to an eardrum of the ear, for the convenience of description and in combination with FIG. 1, unless otherwise specified, the external ear canal 501 refers to an entrance (i.e., an ear hole) of the external ear canal 501 that is away from the tympanic membrane in the present disclosure. Further, the physiological parts (e.g., the concha cavity 502, the cymba conchae 503, the triangular fossa 504, etc.) have a certain volume and depth, and the concha cavity 502 is directly connected to the external ear canal 501, which can be simply regarded as that the aperture is located at a bottom of the concha cavity 502.

Furthermore, different users may have individual differences, resulting in different dimensional differences (e.g., different shapes, sizes, etc.) of ears. For the convenience of description and to reduce (or even eliminate) the individual differences between the users, a simulator (e.g., GRAS 45BC KEMAR) including a head and (left and right) ears of the head may be produced based on the ANSI: S3.36, S3.25 and IEC: 60318-7 standards. Therefore, in the present disclosure, descriptions such as "the user wears an earphone 100," "the earphone 100 is in a wearing state," "in the wearing state," etc., may refer to that the earphone 100 described in the present disclosure is worn on the ear of the simulator. Of course, due to the individual differences between different users, there may be certain differences when the earphone 100 is worn by different users and when the earphone 100 is worn on the ear of the simulator, but the differences should be tolerated.

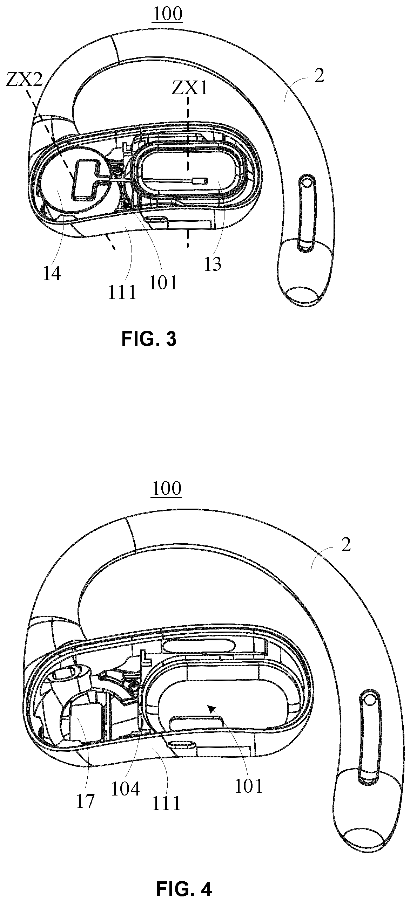

Referring to FIGs. 2-5, the earphone 100 may include a host module 1 and an ear hook 2, and the host module 1 may include a housing assembly 10 and a speaker 13. The host module 1 may also include a battery 14. The ear hook 2 may be in a hooked shape, and the earphone 100 may be worn on the user's ear through the ear hook 2. The ear hook 2 may be connected to the housing assembly 10. In the wearing state, the housing assembly 10 is disposed on a front side of the ear, and at least a portion of the ear hook 2 is located on a rear side of the user's ear, so as to allow the earphone 100 to be hooked on the ear. In addition, the housing assembly 10 may be used to form an accommodation space 101. The speaker 13 may be disposed within the accommodation space 101 for providing an air conduction sound to the external ear canal of the user's ear. The battery 14 may also be disposed within the accommodation space 101.

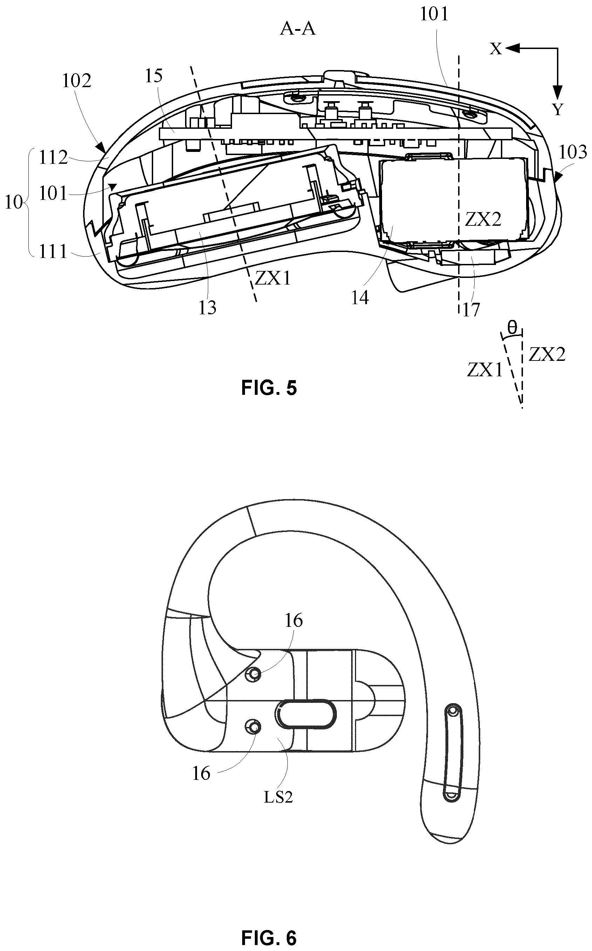

For the convenience of describing a shape of the housing assembly 10, the present disclosure defines that the housing assembly 10 has a first direction X and a second direction Y. The first direction X may be orthogonal to the second direction Y (referring to FIG. 5). The first direction X may be a length direction of the housing assembly 10, and the second direction Y may be a thickness direction of the housing assembly 10.

The housing assembly 10 is stacked on the front side of the user's ear along the second direction Y. The housing assembly 10 further has a first end 102 and a second end 103 disposed opposite to each other along the first direction X. The first end 102 refers to a portion of the housing assembly 10 that faces the concha cavity 502 of the user in the wearing state, and the second end 103 refers to a portion of the housing assembly 10 that is farther away from the concha cavity 502 of the user relative to the first end 102. The second end 103 may be connected to the ear hook 2. The second end 103 may hereinafter also be referred to as a connection end 103, and the first end 102 may hereinafter also be referred to as a free end 102.

The first end 102 of the housing assembly 10 at least partially extends into the concha cavity 502 of the user's ear and leaves the external ear canal of the user's ear in an open state. The external ear canal of the user being in the open state refers to that the housing assembly 10 does not completely close the external ear canal. In addition, due to the individual differences between different users, when the earphone 100 is worn by different users, the housing assembly 10 may partially cover the external ear canal, but the external ear canal is still not completely blocked.

In summary, when the user wears the earphone 100, the ear hook 2 is hooked on the user's ear and partially located behind the user's ear, the housing assembly 10 is located in front of the user's ear, and the second end 103 of the housing assembly 10 extends into the concha cavity 502 of the user. Alternatively, the ear hook 2 may be connected to the second end 103 or a portion close to the second end 103 in the housing assembly 10. Due to limitations of the shape of the ear, a shape of the ear hook 2, and a mounting position of the first end 102 of the housing assembly 10, the second end 103 of the housing assembly 10 is typically located in front of, above, or in an upper front of the first end 102 during wearing the earphone 100.

Optionally, the battery 14 may supply power to the speaker 13. Optionally, in the wearing state, the first end 102 is closer to the concha cavity 502 of the user's ear with respect to the second end 103. The speaker 13 is disposed close to the first end 102, and the battery 14 is disposed close to the second end 103. In this situation, it is more conducive for the speaker 13 to generate the air conduction sound to the external ear canal of the user.

Optionally, the speaker 13 and the battery 14 are spaced apart along the first direction X within the accommodation space 101. In this situation, the speaker 13 and the battery 14 may be assembled in the housing assembly 10 at the same time. This can improve the assembly efficiency and reduce the use of leads.

Optionally, the housing assembly 10 may have an interval wall 104 for separating the speaker 13 from the battery 14. In this situation, the interval wall 104 can separate the battery 14 from the speaker 13, thereby reducing the possibility that water vapor in the speaker 13 contaminates the battery 14.

Optionally, referring to FIG. 5, the speaker 13 has a first axis ZX1. The battery 14 has a second axis ZX2. Each of the first axis ZX1 and the second axis ZX2 has a positive direction pointing to the user's ear in the wearing state. A reference plane is defined by the first direction X and the second direction Y. Projections of the positive direction of the first axis ZX1 and the second axis ZX2 within the reference plane are disposed crosswise. The first axis ZX1 may be parallel to a vibration direction of a vibration diaphragm of the speaker 13, and be an axis that passes through a gravity center of the speaker 13 and a geometric center or a centroid of an end surface (e.g., a circular end surface, a runway shaped end surface) of the speaker 13. The second axis line ZX2 may refer to an axis that passes through a symmetry axis of the battery 14, and through a geometric center or a centroid of two end surfaces of the battery 14.

In this situation, the speaker 13 and the battery 14 are inclined relative to each other. This can reduce a length of the housing assembly 10 in the first direction X compared to a parallel arrangement of the speaker 13 and the battery 14, thereby enabling the housing assembly 10 to stably support and extend into the concha cavity 502 in the wearing state.

Optionally, an intersection angle θ between the projections of the positive direction of the first axis ZX1 and the positive direction of the second axis ZX2 in the reference plane is an acute angle. Optionally, the intersection angle θ between the projections of the positive direction of the first axis ZX1 and the positive direction of the second axis ZX2 is located on a side of the housing assembly 10 facing the user's ear. Optionally, the intersection angle θ between the positive direction of the first axis ZX1 and the positive direction of the second axis ZX2 is within a range from 10 degrees to 14 degrees or a range from 11 degrees to 14 degrees.

In this situation, an inclination degree of the speaker 13 is greater than that of the battery 14, and a projection length of the speaker 13 in the first direction X gradually decreases, which in turn facilitates shortening the length of the housing assembly 10 in the first direction X.

Optionally, a radial size of the speaker 13 is greater than a radial size of the battery 14 in the reference plane. The second direction Y has a positive direction pointing to the user's ear, and an intersection angle θ between the projection of the positive direction of the first axis ZX1 and the positive direction of the second direction Y is greater than an intersection angle θ between the projection of the positive direction of the second axis ZX2 in the reference plane and the positive direction of the second direction Y. Optimally, the second axis ZX2 is disposed to be parallel to the second direction Y. The radial size of the speaker 13 refers to a length of the speaker 13 on a cross section in the reference plane in a direction perpendicular to the first axis ZX1. The radial size of the battery 14 refers to a length of the battery 14 on a cross section in the reference plane in a direction perpendicular to the second axis ZX2.

In this situation, as the radial size of the speaker 13 is greater than the radial size of the battery 14, when the speaker 13 is inclined relative to the second direction Y, a variation degree of the projection length of the speaker 13 in the first direction X is greater than that when the battery 14 is inclined relative to the second direction Y, thereby reducing the length of the housing assembly 10 in the first direction X. In addition, the speaker 13 is inclined relative to the battery 14, so that the vibration diaphragm of the speaker 13 can approximately face the external ear canal of the user, while the second end 103 (which is provided with the battery 14) of the speaker 13 is fitted to a skin in front of the tragus 508 of the user, which in turn facilitates a propagation of the sound from the speaker 13 to the external ear canal of the user.

Optionally, the earphone 100 further includes a circuit board 15 disposed within the accommodation space 101. The circuit board 15 controls the speaker 13 to vibrate to generate the sound when the battery 14 is powered. Alternatively, the circuit board 15 may further include a radio frequency module for a communication connection with a mobile terminal.

Optionally, the circuit board 15 is disposed in the housing assembly 10 and is located on a side of the speaker 13 and the battery 14 away from the user's ear, and a projection of the circuit board 15 along the second direction Y overlaps the speaker 13 and the battery 14. The overlapping between the projection of the circuit board 15 and the speaker 13 and the battery 14 may be partially overlapping or completely overlapping. In this situation, the speaker 13 can be disposed on a side close to the user's ear, which facilitates transmitting the sound to the user's ear.

Specifically, the housing assembly 10 includes a first housing 111 and a second housing 112 that cooperate with each other along the second direction Y. The first housing 111 is disposed on a side of the second housing 112 away from the user's ear. The speaker 13 and the battery 14 may be fixed on the first housing 111, the first housing 111 is closer to the user's ear in the wearing state with respect to the second housing 112, and the circuit board 15 is fixed on the second housing 112. In this situation, the assembly, disassembly, and repair of the earphone 100 are facilitated. Optionally, the circuit board 15 is fixed on the second housing 112 of the housing assembly 10 through a hot melt manner.

Referring to FIG. 6, optionally, the earphone 100 further includes charging interfaces 16 disposed on the first housing 111, and a magnetic element 17 disposed between the battery 14 and the first housing 111 along a direction of the second axis ZX2. In this situation, the earphone 100 can be used with a charging case having a magnetic charging function. The charging interfaces 16 may extend through an outer wall surface LS2 of the first housing 111 and be exposed through the outer wall surface LS2 for a contact charging.

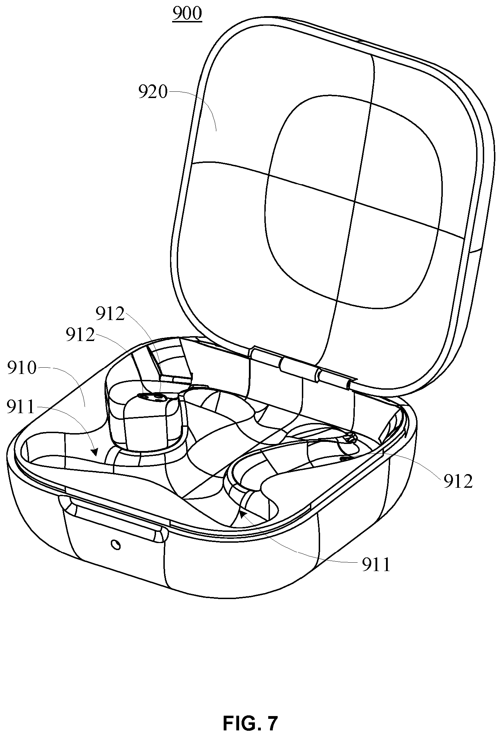

Referring to FIG. 7, a charging case 900 may include a lower housing assembly 910 and an upper housing assembly 920. The lower housing assembly 910 may be provided with two profiling recesses 911 for accommodating earphones 100, respectively. The upper housing assembly 920 may be capped over the lower housing assembly 910 to close the profiling recesses 911.

Further, the charging case 900 may include a main control circuit board disposed within the lower housing assembly 910 and electrode terminals 912 disposed on the main control circuit board. A plurality of sets (e.g., two sets) of the electrode terminals 912 may be set as required. Correspondingly, when any of the earphones 100 is placed into the charging case 900, the charging interfaces 16 in the earphone 100 may be in one-to-one contact with the electrode terminals 912 in the charging case 900, so as to satisfy functions of charging, detection, etc. Correspondingly, the electrode terminals 912 may include a power supply positive terminal and a power supply negative terminal. The electrode terminals 912 may further include a detection terminal. Lines connecting two of the electrode terminals 912 may form a triangle, e.g., a positive triangle. Alternatively, the lines may be spaced apart in a straight line, e.g., spaced apart from each other and collinear.

Optionally, the electrode terminals 912 may be exposed from the profiling recesses 911. When the earphone 100 is accommodated in the profiling recess 911, the charging interfaces 16 are electrically connected to the electrode terminals 912.

Alternatively, the charging case 900 may include magnetic suction structures (not shown) disposed within the lower housing assembly 910. A plurality of sets (e.g., two sets) of the magnetic suction structures may be set as required. After any of the earphones 100 is placed into the profiling recess 911, the magnetic suction structure and a magnetic element 17 within the earphone 100 may form a magnetic suction pair, so that the charging interfaces 16 are in one-to-one contact with the electrode terminals 912.

Several exemplary structures of the ear hook 2 of the earphone 100 are illustrated below, and different exemplary structures may also be combined with each other to obtain other exemplary structures belonging to the present embodiment that are not described in detail.

To improve a wearing comfort of the ear hook 2, referring to a first exemplary structure of ear hook 2 below.

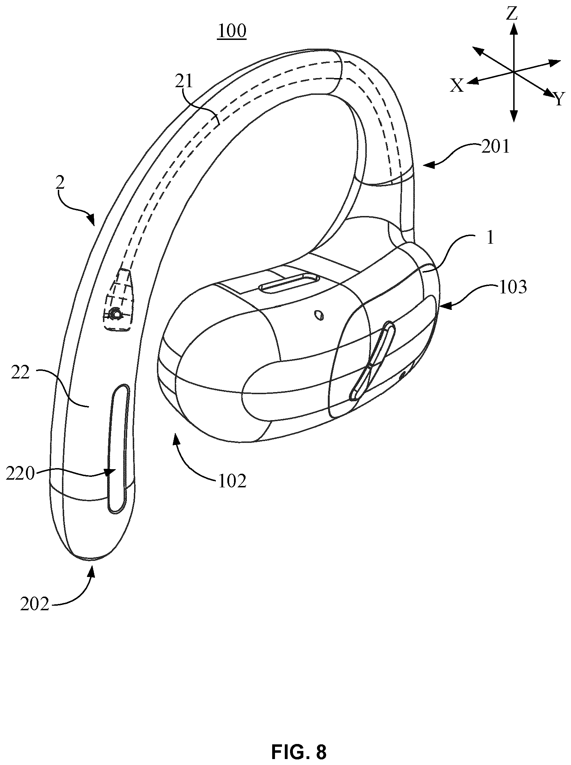

As shown in FIG. 8, the earphone 100 may include the host module 1 and the ear hook 2. The ear hook 2 is disposed in a curved shape and has a first end 201 and a second end 202 away from the first end 201, and the first end 201 is connected to the host module 1. The ear hook 2 is used to be hooked on a user's ear. The ear hook 2 includes an elastic framework 21 and a covering member 22. The elastic framework 21 extends along an extension direction of the ear hook 2, the covering member 22 covers the elastic framework 21, and the covering member 22 is provided with a buffer cavity 220.

By setting the ear hook 2 including the elastic framework 21 and the covering member 22, and making each of the elastic framework 21 and the covering member 22 have a certain elasticity limit, the elastic framework 21 and the covering member 22 can elastically deform within their respective elasticity limits. Therefore, when the user wears the earphone 100, the ear hook 2 can be fitted to the ear through the elastic deformation of the ear hook 2, thereby effectively improving the comfort and stability of wearing. By disposing the buffer cavity 220 in the covering member 22, the covering member 22 can be more prone to elastic deformation when the user wears the earphone 100. Therefore, the covering member 22 can adapt to different ear widths, so as to better fit the user's ear, and realize a self-adaptation function. Furthermore, due to the existence of the buffer cavity 220, a contact area between the covering member 22 and the user's ear can be increased when the covering member 22 contacts with the ear, thereby reducing a pressure exerted by the covering member 22 on the ear, and improving the wearing comfort of the user.

Further, as shown in FIG. 8, the buffer cavity 220 is closer to the second end 202 than to the first end 201.

The second end 202 is farther away from the host module 1 than the first end 201. By disposing the buffer cavity 220 close to the second end 202, a portion close to the second end 202 can be more prone to elastic deformation than a portion close to the first end 201 when the user is wearing the earphone 100. An adaptability of the ear hook 2 can be improved while ensuring the connection stability between the host module 1 and the ear hook 2, thereby effectively improving the wearing comfort of the user.

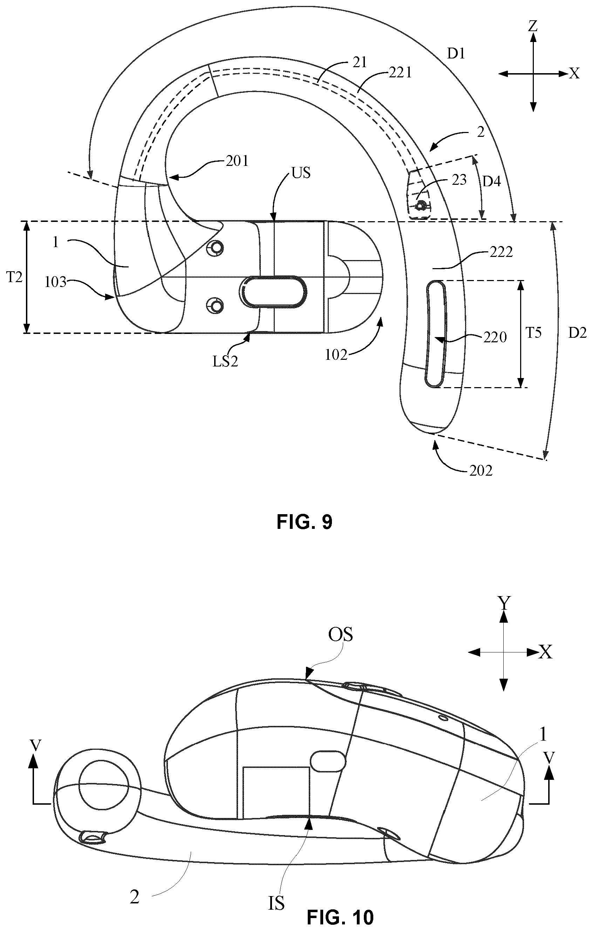

Further, as shown in FIG. 9, the covering member 22 includes a rear covering section 222 disposed on a rear side of the ear in the wearing state. The second end 202 is located in the rear covering section 222, and the buffer cavity 220 is provided in the rear covering section 222.

When the earphone 100 is in the wearing state, the ear hook 2 is hooked around an outer periphery of the user's ear, and the rear covering section 222 is located on the rear side of the ear. By providing the buffer cavity 220 in the rear covering section 222, a deformable range of the rear covering section 222 can be improved, so as to better adapt to the use of users with different ear widths, thereby effectively reducing the pressure exerted by the ear hook 2 on the rear side of the user's ear, and providing the user with a better wearing experience.

Optionally, as shown in FIG. 9, the host module 1 includes the connection end 103 connected to the first end 201 of the ear hook 2 and the free end 102 away from the connection end 103. At least a portion of the rear covering section 222 is disposed opposite to the free end 102, and at least a portion of the buffer cavity 220 is located in the portion of the rear covering section 222 disposed opposite to the free end 102.

By disposing at least a portion of the rear covering section 222 opposite to the free end 102, at least a portion of the buffer cavity 220 can be located in the portion of the rear covering section 222 disposed opposite to the free end 102, so as to realize that when the user wears the earphone 100, the rear covering section 222 and the free end 102 are located on two sides of the ear, respectively, and the rear covering section 222 located on the rear side of the ear can adaptively undergo the elastic deformation, thereby effectively reducing the pressure exerted on the user's ear during the wearing, and improving the wearing comfort of the user.

Further, as shown in FIG. 8 and FIG. 9, the free end 102 extends into the concha cavity 502 of the ear in the wearing state, and the free end 102 and the rear covering section 222 are disposed to jointly clamp an ear region from a front side and a rear side of the ear region corresponding to the concha cavity 502. The buffer cavity 220 is located in the portion of the rear covering section 222 for clamping the ear region.

The free end 102 extends into the concha cavity 502 when the earphone 100 is in the wearing state, so as to realize that the rear covering section 222 and the free end 102 can clamp the front side and the rear side of the user's ear when the user wears the earphone 100, thereby increasing the stability of the wearing, and reducing a possibility that the earphone 100 falls off. The portion of the rear covering section 222 used to clamp the ear region is a portion that exerts a relatively great pressure on the user's ear. By disposing the buffer cavity 220 in the portion, the pressure exerted by the rear covering section 222 on the ear can be slowed, thereby improving the wearing experience of the user.

Optionally, as shown in FIG. 8 and FIG. 9, the host module 1 has a length direction X, a width direction Z, and a thickness direction Y perpendicular to each other, and the host module 1 is stacked on the ear along the thickness direction Y in the wearing state. A positive projection of the buffer cavity 220 on a reference plane perpendicular to the length direction X partially overlaps with a positive projection of the free end 102 on the reference plane.

By disposing the positive projection of the buffer cavity 220 in the reference plane perpendicular to the length direction X to partially overlap with the positive projection of the free end 102 in the reference plane (i.e., the free end 102 and at least a portion of the rear covering section 222 where the buffer cavity 220 is located clamp both sides of the ear opposite to each other), an excessive pressure can not be exerted when clamping the user's ear, thereby improving the conform while ensuring a compactness.

Optionally, as shown in FIG. 9 and FIG. 10, in the wearing state, the host module 1 has an inner surface IS, an outer surface OS, an upper surface US, and a lower surface LS2. The inner surface IS faces the ear along the thickness direction Y, the outer surface OS is away from the ear along the thickness direction Y, the upper surface US and the lower surface LS2 are connected to the inner surface IS and the outer surface OS. The upper surface US faces the ear hook 2, and the upper surface US and the lower surface LS2 are spaced apart in the width direction Z. The covering member 22 is divided into a front covering section 221 and the rear covering section 222 by an extension plane of the upper surface US. The first end 201 is located in the front covering section 221, and the second end 202 is located in the rear covering section 222. The buffer cavity 220 is provided in the rear covering section 222.

The ear hook 2 is curved around the host module 1, so as to position and fix a position of the host module 1 relative to the user's ear when the user wears the ear hook 2. As ears of different people have different sizes and widths, and the rear covering section 222 disposed opposite to the free end 102 is provided with the buffer cavity 220, the rear covering section 222 can have a greater deformable range, so that the rear covering section 222 better fits the user's ear when clamping the user's ear. Therefore, the contact area between the rear covering section 222 and the ear can be improved, and no excessive pressure that causes discomfort to the user is exerted, thereby effectively improving the user experience.

Further, as shown in FIG. 9, a size T5 of the buffer cavity 220 in the width direction Z is greater than a size T2 of the host module 1 in the width direction Z.

By disposing the size T5 of the buffer cavity 220 in the width direction Z greater than the size T2 of the host module 1 in the width direction Z, the buffer cavity 220 can have a sufficient deformation space, so that the rear covering section 222 is prone to deformation. Therefore, the rear covering section 222 can better fit the structure of the ear when clamping the user's ear, which enables the user to more conveniently adjust the wearing.

Optionally, as shown in FIG. 9, the covering member 22 includes the front covering section 221 and the rear covering section 222. The front covering section 221 covers the elastic framework 21, and the front covering section 221 and the rear covering section 222 are connected sequentially along the extension direction. The rear covering section 222 does not cover the elastic framework 21, and the buffer cavity 220 is formed in the rear covering section 222.

A stiffness of the elastic framework 21 may be greater than a stiffness of the covering member 22, so that the elastic framework 21 supports and maintains a relative shape of the ear hook 2. The front covering section 221 covers the elastic framework 21, so that the user's ear is not in a direct contact with the elastic framework 21, which protects the user's ear while maintaining the relative shape of the ear hook 2, and improves the comfort of the user. In addition, the rear covering section 222, which clamps the ear together with the free end 102, does not cover the elastic framework 21. That is, the rear covering section 222 may be located downstream to an elastic support member along an extension direction from the first end 201 to the second end 202, so that the rear covering section 222 is more prone to elastic deformation relative to the front covering section 221, thereby increasing the comfort when fitting with the user's ear. On this basis, the buffer cavity 220 is formed in the rear covering section 222, so that the rear covering section 222 has a greater elastic range, and realizes a greater elastic deformation to adapt to different ear widths, thereby improving the applicability range and the user experience of the earphone 100. Optionally, a material of the covering member 22 may include a non-metallic material with elasticity, such as silicone, rubber, etc. A material of the elastic framework 21 may include a metallic material or a non-metallic material, such as a titanium wire, a steel wire, an elastic plastic piece, etc., which is not limited herein.

Optionally, as shown in FIG. 9, the ear hook 2 includes a fixing block 23. The fixing block 23 is fixedly disposed at an end of the elastic framework 21 close to the second end 202. The front covering section 221 covers the fixing block 23, and an extension length D2 of the rear covering section 222 along the extension direction is greater than an extension length D4 of the fixing block 23 along the extension direction.

By fixedly disposing the fixing block 23 at the end of the elastic framework 21 close to the second end 202 and causing the front covering section 221 to cover the fixing block 23, the stability of the fixing between the front covering section 221 and the elastic framework 21 can be improved. The extension length D2 of the rear covering section 222 along the extension direction is greater than the extension length D4 of the fixing block 23 along the extension direction, so that the rear covering section 222 has a greater extension length. Therefore, a sufficient contact area can be provided when the user wears the earphone 100, thereby ensuring the wearing comfort of the user. Since the rear covering section 222 and the front covering section 221 may relatively bend during the elastic deformation of the ear hook 2, by disposing the fixing block 23, a possibility that the elastic framework 21 punctures the rear covering section 222 can be effectively reduced, thereby increasing a service life of the earphone 100.

Optional, a ratio of the extension length D2 of the rear covering section 222 along the extension direction to the extension length D1 of the front covering section 221 along the extension direction is greater than or equal to 1/5 and is less than or equal to 1/2, so that the rear covering section 222 has a sufficient contact area with the user's ear in the wearing state of the earphone 100, and the elastic framework 21 covered by the front covering section 221 provides a sufficient support strength to maintain the relative shape of the ear hook 2, thereby improving the aesthetic appearance and the service life of the earphone 100.

Optionally, the extension length D1 of the front covering section 221 along the extension direction is within a range from 50 mm to 70 mm. If the value of the extension length D1 is too small, a greater compression is made on the user's ear during the wearing, and the wearing comfort is not high. If the value of the extension length D1 is too great, the wearing may be unstable when the user wears the earphone 100 since the ear hook 2 can not clamp the ear well.

Optionally, the extension length D2 of the rear covering section 222 is within a range from 10 mm to 30 mm. In the range, the ear hook 2 can be comfortable and aesthetic, thereby enhancing the user experience. If the value of the extension length D2 is too great, the front covering section 221 may exceed the ear region of the user in the wearing state, thereby adversely affecting the convenience and the aesthetics of use. If the value of the extension length D2 is too small, an area and a length of the rear covering section 222 clamping the user's ear may be too small to clamp the ear well in the wearing state, resulting in an unstable wearing.

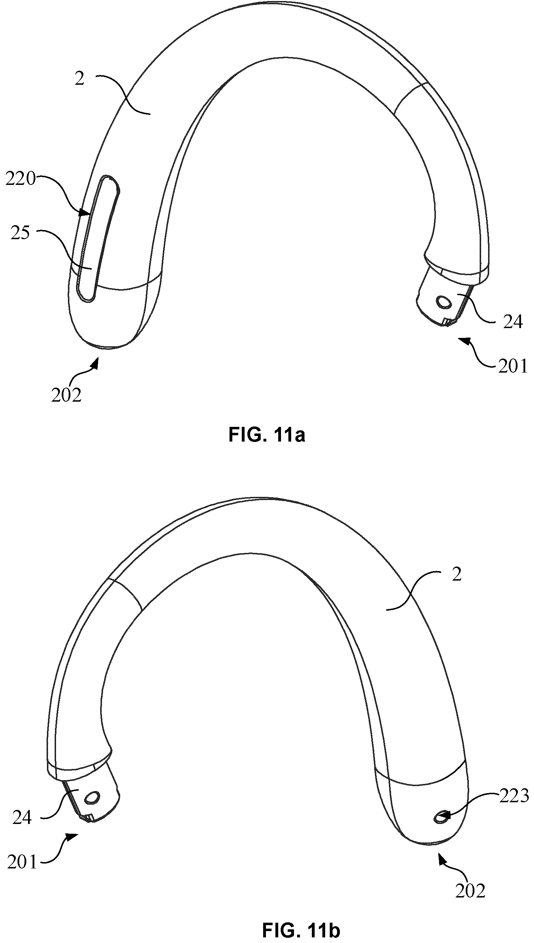

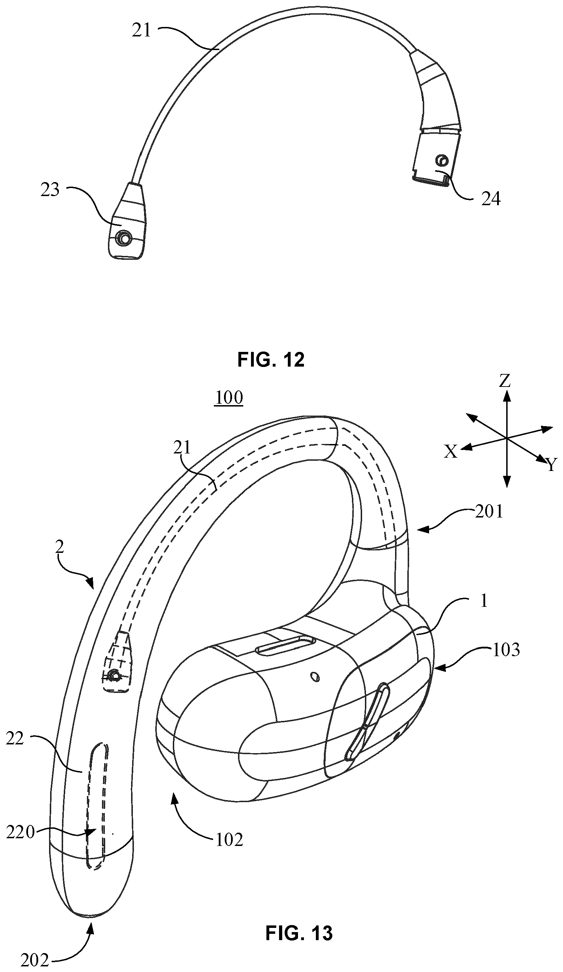

Optionally, as shown in FIG. 11a and FIG. 12, the ear hook 2 further includes a connector 24. The connector 24 is fixedly disposed at an end of the elastic framework 21 close to the first end 201, and the connector 24 is connected and fixed to the host module 1. The ear hook 2 is connected and fixed to the host module 1 by the connector 24, which effectively improves the connection stability between the ear hook 2 and the host module 1, and facilitates the assembly and disassembly.

Optionally, as shown in FIG. 13, the buffer cavity 220 is configured in a closed manner and formed inside the covering member 22. The closed buffer cavity 220 can effectively prevent impurities (e.g., dust, grease, etc.) from entering the buffer cavity 220 and damaging the buffer cavity 220, thereby effectively improving a service life of the covering member 22.

Optionally, as shown in FIG. 8, the buffer cavity 220 is configured as a hole or a recess, so as to better adapt to the elastic deformation of the covering member 22 and enhance the wearing comfort of the user. In some embodiments, the buffer cavity 220 is configured as the hole and runs through the covering member 22 along the thickness direction Y. In other embodiments, the buffer cavity 220 is configured as an elongated and curved through-hole, and a bending direction of the buffer cavity 220 matches a bending structure of a portion of the covering member 22 provided with the buffer cavity 220.

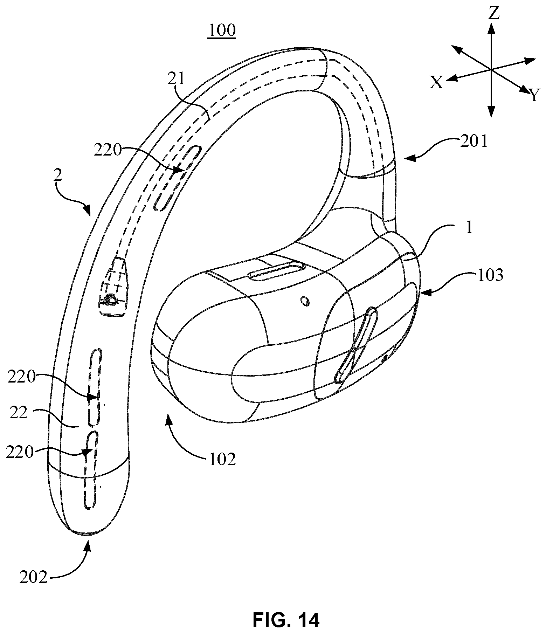

Optionally, as shown in FIG. 14, there are at least two buffer cavities 220. The at least two buffer cavities 220 are disposed at intervals along the extension direction of the ear hook 2, so that the covering member 22 has a sufficient elasticity range, thereby improving a service life of the ear hook 2 by reducing a probability of damage due to an excessive width of the user's ear, while improving the comfort of the user when wearing the earphone 100.

Optionally, as shown in FIG. 11a, the ear hook 2 further includes a filling member 25. A hardness of the filling member 25 is less than a hardness of the covering member 22, and the filling member 25 is disposed inside the buffer cavity 220, thereby providing a certain support for the covering member 22 without affecting the elastic deformation of the covering member 22. Therefore, the service life of the covering member 22 is improved, thereby improving the service life of the ear hook 2.

Optionally, the covering member 22 has an inner surface facing the host module 1 and an outer surface away from the inner surface. The inner surface is disposed closer to the buffer cavity 220 with respect to the outer surface. Optionally, the inner surface of the covering member 22 is a surface contacting the user's ear. By disposing the buffer cavity 220 closer to the inner surface, the covering member 22 has a better fit and softness when the user wears the earphone 100, thereby improving the user comfort.

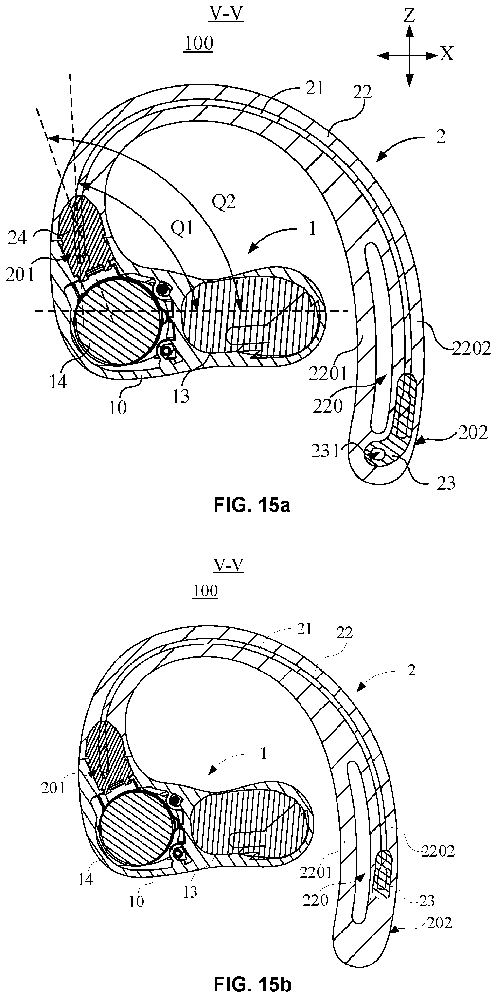

In the above examples illustrated in FIG. 9, FIG. 13, etc., the elastic framework 21 and the buffer cavity 220 are spaced apart or adjacent to each other along the extension direction of the ear hook 2. In examples illustrated in FIG.15a and FIG.15b, the elastic framework 21 and the buffer cavity 220 are spaced apart in a radial direction of the elastic framework 21. Specifically, the elastic framework 21 has a preset radial direction perpendicular to the extension direction of the elastic framework 21 and through the buffer cavity 220, and the buffer cavity 220 is spaced apart from the elastic framework 21 in the preset radial direction. In this way, on the basis of the buffer cavity 220 providing the wearing comfort, the elastic framework 21 can provide a better support strength at a position of the buffer cavity 220, thereby providing a higher wearing stability.

Specifically, the buffer cavity 220 is closer to the host module 1 in the preset radial direction with respect to the elastic framework 21, making the buffer cavity 220 closer to the ear in the wearing state. Therefore, the buffer cavity 220 can provide an elastic buffer when fitting the user's ear, resulting in better fit and softness, and improving the wearing comfort.

Specifically, the covering member 22 includes a first covering portion 2201 and a second covering portion 2202 disposed on both sides of the buffer cavity 220 along the preset radial direction. The first covering portion 2201 and the second covering portion 2202 are spaced apart to form the buffer cavity 220. The first covering portion 2201 is closer to the host module 1 with respect to the second covering portion 2202 for contacting the ear. In this way, the first covering portion 2201 is farther away from the elastic framework 21, and the buffer cavity 220 provides a greater space for the deformation of the first covering portion 2201, so that the first covering portion 2201 fits the ear and provides a softer fit more effectively, thereby effectively improving the wearing comfort.

As an example shown in FIG. 15a, the elastic framework 21 is threaded through the second covering portion 2202. Optionally, the elastic framework 21 extends from the first end of the ear hook 2 to the second end 202 of the ear hook 2. In this way, a more complete and stronger support can be provided for the ear hook 2, thereby effectively improving the wearing stability. In addition, the elastic framework 21 extends from the first end 201 of the ear hook 2 to the second end 202 of the ear hook 2, so that it is not easy to puncture the covering member 22 when the covering member 22 is bent, thereby improving the service life of the covering member 22. Optionally, the buffer cavity 220 is closer to the second end 202 of the ear hook 2 than to the second end 202 of the ear hook 2.

In some embodiments, the elastic framework 21 further extends above the buffer cavity 220 (i.e., above a portion of the buffer cavity 220 close to the second end 202 of the ear hook 2) along the extension direction of the ear hook 2 from the first end 201 to the second end 202. That is, the elastic framework 21 may extend to a position between the buffer cavity 220 and an end position of the second end 202. In this way, a better support can be provided. In other embodiments, the fixing block 23 is connected to an end of the elastic framework 21 extending to the second end 202 of the ear hook 2. The fixing block 23 bends and extends from the elastic framework 21 to a side of the buffer cavity 220, and bends and extends to above the buffer cavity 220 (i.e., above the portion of the buffer cavity 220 close to the second end 202 of the ear hook 2) along the extension direction of the ear hook 2 from the first end 201 to the second end 202. That is, the fixing block 23 may extend to a position between the buffer cavity 220 and the end position of the second end 202. In this way, a better support can be provided, and the covering member 22 can be less prone to being punctured by the elastic framework 21.

In some embodiments, an end of the elastic framework 21 close to the second end 202 is inserted into the fixing block 23, and a circumferential size of the end of the fixing block 23 away from the elastic framework 21 is greater than a circumferential size of the end of the fixing block 23 inserted into the elastic framework 21. By inserting the elastic framework 21 into the fixing block 23, the elastic framework 21 and the fixing block 23 can be connected, which is conducive to improving the stability of the connection between the elastic framework 21 and the fixing block 23 without affecting the support for the ear hook 2 provided by the elastic framework 21. Furthermore, the circumferential size of the end of the fixing block 23 away from the elastic framework 21 is greater than the circumferential size of the end of the connection with the elastic framework 21, which reduces the difficulty of the production process of the fixing block 23 while realizing the bending and extension of the fixing block 23, thereby improving the strength and service life of the fixing block 23. In addition, a contact area between the fixing block 23 and the covering member 22 can be improved, thereby reducing the difficulty of the production process of the ear hook 2 and improving the service life of the ear hook 2.

Optionally, as shown in FIG. 11b and FIG. 15a, the ear hook 2 is provided with a first positioning hole 223, and the fixing block 23 is provided with a second positioning hole 231. The second positioning hole 231 is disposed at an end of the fixing block 23 away from the elastic framework 21, and the first positioning hole 223 and the second positioning hole 231 are disposed opposite to each other. By disposing the first positioning hole 223 and the second positioning hole 231 opposite to each other, an external positioning device can be allowed to position the fixing block 23 through the first positioning hole 223, so that shapes and positional sizes of the components of the ear hook 2 are more accurate, thereby improving a yield rate of the ear hook 2. On the basis that the circumferential size of the end of the fixing block 23 away from the elastic framework 21 is greater than the circumferential size of the end of the interposed end, a hole diameter of the second positioning hole 231 is relatively enlarged, which facilitates alignment of the external positioning device.

In some embodiments, as shown in FIG. 15a, the end of the elastic framework 21 close to the first end 201 is inserted into the connector 24, and the extension direction of the end of the elastic framework 21 close to the first end 201 intersects with the extension direction of the connector 24. In this way, a stable connection between the connector 24 and the host module 1 and a stable connection between the elastic framework 21 and the connector 24 can be realized simultaneously, thereby improving the connection stability between the elastic framework 21 and the connector 24 and the connection stability between the ear hook 2 and the host module 1.

Optionally, as shown in FIG. 14 and FIG. 15a, the host module 1 has the length direction X, the width direction Z, and the thickness direction Y perpendicular to each other. The host module 1 is stacked on the ear along the thickness direction Y in the wearing state. The extension direction of the end of the elastic framework 21 close to the first end 201 and the length direction X have a first angle Q1 facing the ear hook 2. The extension direction of the connector 24 and the length direction X have a second angle Q2 facing the ear hook 2. The first angle Q1 is smaller than the second angle Q2. By disposing the first angle Q1 and the second angle Q2 as two angles of different angular sizes, the elastic framework 21 and the connector 24 can cross each other. By reasonably disposing the angular sizes of the first angle Q1 and the second angle Q2, the end of the elastic framework 21 connected to the connector 24 is closer to a center of a cross section of the ear hook 2, while ensuring the connection stability between the connector 24 and the host module 1, which is more conducive to the elastic framework 21 providing a good support for the ear hook 2, thereby improving the user experience and the service life of the earphone 100. Optionally, the first angle Q1 is within a range from 70 degrees to 110 degrees. For example, the first angle Q1 may be 80 degrees, 85 degrees, 90 degrees, 95 degrees, 100 degrees, etc. The second angle Q2 is within a range from 90 degrees to 130 degrees. For example, the second angle Q2 may be 100 degrees, 105 degrees, 110 degrees, 115 degrees, 120 degrees, etc.

As another example shown in FIG. 15b, the elastic framework 21 may extend to the second covering portion 2202. Optionally, the ear hook 2 includes the fixing block 23. The fixing block 23 may be disposed at the end of the elastic framework 21 close to the second end 202, and the covering member 22 covers the fixing block 23. The fixing block 23 is located on the side of the buffer cavity 220 away from the host module 1. That is, the fixing block 23 is located on the second covering portion 2202. In this way, a fitting area between the side of the buffer cavity 220 close to the host module 1 and the user's ear can be increased through deformation during the wearing, thereby reducing a pressure on the ear and fitting the user's ear more comfortably. On the one hand, the wearing comfort is improved. On the other hand, the deformation buffer can realize an elastic fit to the human ear, thereby improving the wearing stability. Further, portions of the fixing block 23 and the elastic framework 21 are located on the side of the buffer cavity 220 away from the host module 1. This can improve the support strength of the ear hook 2 without affecting the deformation of the buffer cavity 220. Therefore, the buffer cavity 220 can generate more stable deformation, thereby ensuring a comfortable fit to the user's ear and the wearing stability. Furthermore, the fixing block 23 can reduce a possibility that the elastic framework 21 punctures the second covering portion 2202, thereby improving the stability and reliability of the covering member 22.

Optionally, the fixing block 23 is located between two ends of the buffer cavity 220 along the extension direction of the ear hook 2, and is closer to the end of the buffer cavity 220 close to the second end 102. In this way, the buffer cavity 220 can be more covered along the extension direction of the ear hook 2, which can effectively provide a stronger support for the buffer cavity 220 to deform more and fit better to the ear, and also provide a stronger support for the whole ear hook 2 so as to ensure a support performance of the whole ear hook 2.

To improve the wearing comfort of the ear hook 2, referring to a second exemplary structure of ear hook 2 below.

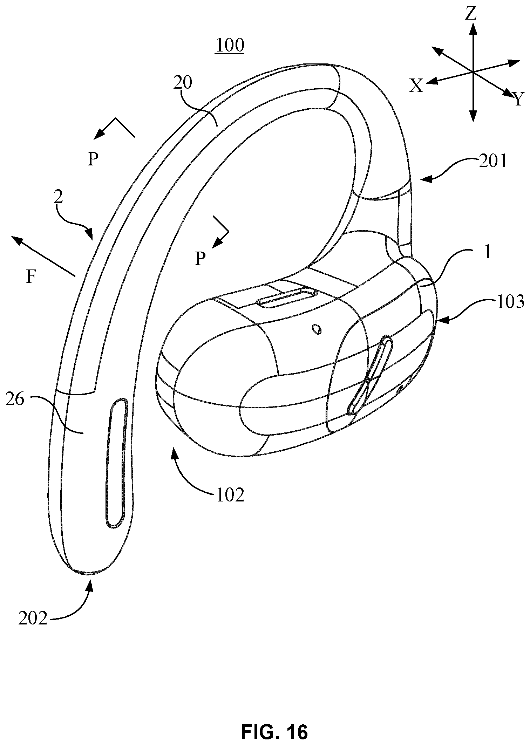

As shown in FIG. 16, the earphone 100 may include the host module 1 and the ear hook 2. The ear hook 2 is connected to the host module 1. The ear hook 2 includes a connection body 20 and an elastic buffer portion 26. The connection body 20 is connected to the host module 1, and the elastic buffer portion 26 is connected to the connection body 20. The connection body 20 forms a first portion of an outer surface of the ear hook 2, and the elastic buffer portion 26 forms a second portion of the outer surface of the ear hook 2. At least a portion of the second portion of the outer surface faces the host module 1. A hardness of the elastic buffer portion 26 is less than a hardness of the connection body 20.

By disposing the ear hook 2 including the connection body 20 and the elastic buffer portion 26, and making the elastic buffer portion 26 have a certain elasticity limit, the elastic buffer portion 26 can elastically deform within the respective elasticity limit. Therefore, when the user wears the earphone 100, the ear hook 2 can be fitted to the ear through the elastic deformation of the ear hook 2, thereby effectively improving the comfort and stability of wearing. The hardness of the elastic buffer portion 26 is less than the hardness of the connection body 20, and at least a portion of the elastic buffer portion 26 facing the second portion of the outer surface of the host module 1 is in direct contact with the ear when the user wears the earphone 100. The connection body 20 with a relatively high hardness can provide a support function, thereby ensuring the aesthetics of the ear hook 2 and improving the wearing comfort of the user.

Optionally, the elastic buffer portion 26 is detachably connected to the connection body 20. By disposing the elastic buffer portion 26 and the connection body 20 as two detachable parts, the manufacture and assembly of the earphone 100 can be facilitated. Furthermore, when a part is damaged, the part can be replaced separately, thus improving a convenience of use and the service life of the earphone 100.

Optionally, the elastic buffer portion 26 and the connection body 20 are slidably connected, which facilitates the assembly and disassembly between the elastic buffer portion 26 and the connection body 20, thereby improving the assembly efficiency and the disassembly efficiency of the ear hook 2, and facilitating subsequently separate replacement of the elastic buffer portion 26 or the connection body 20.

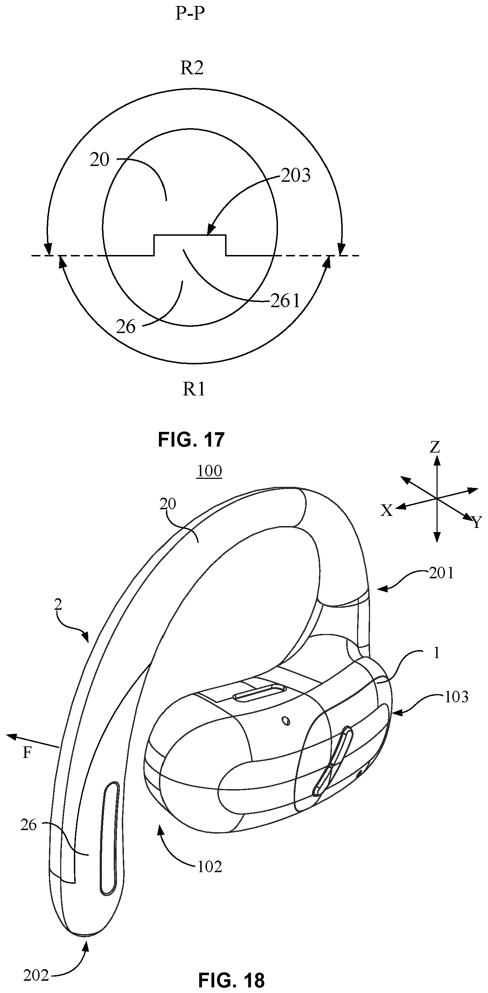

In some embodiments, as shown in FIG. 17, the elastic buffer portion 26 is provided with a sliding edge 261, and the connection body 20 is provided with a sliding groove 203. The sliding edge 261 is slidably embedded in the sliding groove 203, which effectively realizes the fixation between the elastic buffer portion 26 and the connection body 20, and facilitates the assembly and disassembly.

In some embodiments, the elastic buffer portion 26 is bonded or magnetically connected to the connection body 20. The bonding structure and the magnetic connection structure are simple, which facilitates the assembly and disassembly. No additional structure needs to be provided for the connection between the elastic buffer portion 26 and the connection body 20, thereby effectively saving a production cost and reducing subsequent maintenance costs.

Optionally, as shown in FIG. 16, the host module 1 includes the connection end 103 connected to one end of the ear hook 2 and the free end 102 away from the connection end 103. The host module 1 is stacked on the user's ear in the wearing state, and at least a portion of the outer surface of the second portion is disposed opposite to the free end 102.

The connection end 103 of the host module 1 is connected to the ear hook 2, and the free end 102 is disposed opposite to the at least a portion of the second portion of the outer surface of the elastic buffer portion 26. Therefore, when the user wears the earphone 100, the free end 102 and at least a portion of the outer surface of the second portion clamp both sides of the ear. The elastic buffer portion 26 may adaptively undergo the elastic deformation to facilitate the wearing of the users with different ear sizes, thereby effectively improving an adaptability of the earphone 100 while ensuring the stability of the earphone 100 in the wearing state.

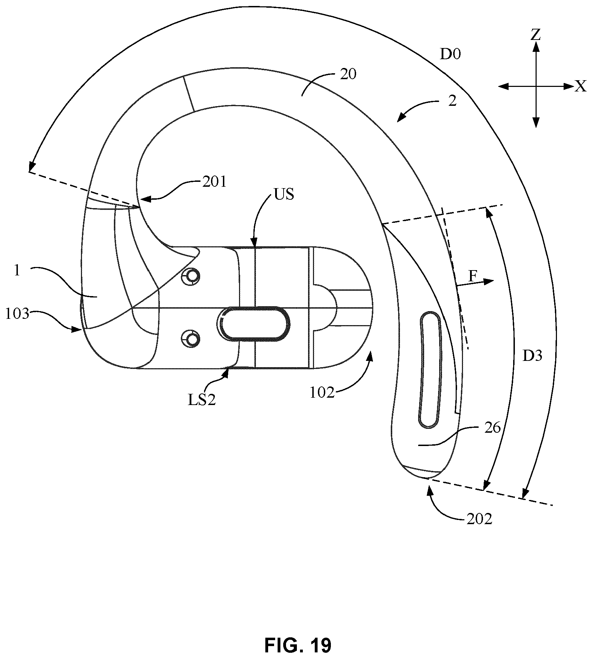

Optionally, as shown in FIG. 18 and FIG. 19, if an extension length D3 of the elastic buffer portion 26 along the extension direction of the ear hook 2 is greater than or equal to 1/3 of an extension length D0 of the ear hook 2 along the extension direction, the elastic buffer portion 26 has a sufficient contact length with the user's ear in the wearing state. This can enhance a contact area between the elastic buffer portion 26 and the ear, thereby better fitting the ear and enhancing the wearing comfort of the user.

Optionally, as shown in FIG. 17, in a portion of a section along the extension direction of the ear hook 2, a same cross section perpendicular to the extension direction of the ear hook 2 may have the elastic buffer portion 26 and the connection body 20. A ratio of a circumferential size R1 of an outer edge of the elastic buffer portion 26 to a circumferential size R2 of an outer edge of the connection body 20 is greater than or equal to 0.2 and less than 1. Therefore, the elastic buffer portion 26 having a lower hardness can alleviate a discomfort due to the compression force exerted by the ear hook 2 when wearing the ear hook 2, while the connection body 20 provides a sufficient support for the ear hook 2 to ensure the relative shape of the ear hook 2, thereby enhancing the wearing comfort of the user.

Optionally, as shown in FIG. 16 and FIG. 18, the host module 1 has the length direction X, the width direction Z, and the thickness direction Y perpendicular to each other, and the host module 1 is stacked on the user's ear along the thickness direction Y in the wearing state. A positive projection of the elastic buffer portion 26 on the reference plane perpendicular to the length direction X is partially overlapped with a positive projection of the free end 102 on the reference plane. That is, the positive projection of the elastic buffer portion 26 on the reference plane parallel to the width direction Z and the thickness direction Y is partially overlapped with the positive projection of the free end 102 on the reference plane.

By disposing the positive projection of the elastic buffer portion 26 on the reference plane perpendicular to the length direction X to partially overlap with the positive projection of the free end 102 on the reference plane (i.e., the free end 102 and at least a portion of the elastic buffer portion 26 clamp the both sides of the ear relative to each other), no excessive pressure is exerted when clamping the user's ear while ensuring the stability, thereby ensuring the fit and enhancing the comfort.

Further, as shown in FIG. 16 and FIG. 18, the elastic buffer portion 26 is located closer to the host module 1 than the connection body 20, so as to increase the contact area between the elastic buffer portion 26 having the lower hardness and the user's ear. The structure of the user's ear can be fitted when clamping the user's ear, thereby improving the comfort. In some embodiments, the elastic buffer portion 26, for example, may be closer to the host module 1 in the radial direction of the ear hook 2 with respect to the connection body 20. The radial direction of the ear hook 2 is perpendicular to the extension direction of the ear hook 2.

Further, as shown in FIG. 16, FIG. 18, and FIG. 19, the elastic buffer portion 26 and the connection body 20 are spliced, so that when the ear hook 2 is hooked to the user's ear, the contact area between the elastic buffer portion 26 having the lower hardness and the user's ear is increased, and a contact area between the connection body 20 having a higher hardness and the user's ear is decreased, thereby enhancing the comfort of the user. In some embodiments, the elastic buffer portion 26 and the connection body 20, for example, are spliced with each other in a normal direction F of an outer contour of the ear hook 2 and the extension direction of the ear hook 2. The normal direction F of the outer contour of the ear hook 2 is perpendicular to a direction of the outer contour of the ear hook 2. The splice of the elastic buffer portion 26 and the connection body 20 in the normal direction F of the outer contour of the ear hook 2 can facilitate positioning and installation, thereby effectively reducing the difficulty of the assembling.

Optionally, as shown in FIG. 16, FIG. 18, and FIG. 19, the ear hook 2 has the first end 201 and the second end 202 opposite to each other. The first end 201 is connected to the host module 1, the second end 202 is disposed in the elastic buffer portion 26, and the elastic buffer portion 26 is closed at the second end 202 along a circumferential direction. A portion of the elastic buffer portion 26 forming the second end 202 is located under the connection body 20 in a direction from the first end 201 to the second end 202 of the ear hook 2, and another portion of the elastic buffer portion 26 is located at a side of the connection body 20 facing the host module 1. The splicing of the elastic buffer portion 26 and the connection body 20 can reduce the difficulty of the assembling, and improve the stability and reliability of the connection. By disposing the portion of the elastic buffer portion 26 to be located at the side of the connection body 20 facing the host module 1 can increase the contact between the elastic buffer portion 26 and the user's ear with respective to the connection body 20, thereby improving the wearing comfort of the user. By disposing the portion of the elastic buffer portion 26 forming the second end 202 under the connection body 20 in the direction from the first end 201 to the second end 202 of the ear hook 2, the contact area between the elastic buffer portion 26 and the ear can be improved, thereby improving the stability of the wearing while ensuring the wearing comfort. The elastic buffer portion 26 is closed along the circumference of the second end 202, which can reduce the entry of external impurities into the elastic buffer portion 26, thereby avoiding damage to an interior of the elastic buffer portion 26 and increasing the service life of the elastic buffer portion 26.

Further, as shown in FIGs. 16-19, the first end 201 is connected to the host module 1, and the circumferential size R1 of the elastic buffer portion 26 is gradually increased or stepped up in the direction from the first end 201 to the second end 202. As the first end 201 is connected to the host module 1, the first end 201 needs a higher hardness to ensure the stability and reliability of the connection of the ear hook 2, and needs to provide a sufficient support to maintain a relative position between the ear hook 2 and the host module 1, so as to enable the user to wear and use the earphone 100 normally. Therefore, the circumferential size R1 of the elastic buffer portion 26 having the lower hardness close to the first end 201 is relatively small, and the circumferential size R1 of the elastic buffer portion 26 increases gradually or stepwise in the direction from the first end 201 to the second end 202, so as to effectively improve the use comfort for the user.

Optionally, as shown in FIGs. 16-19, the connection body 20 and the elastic buffer portion 26 are connected sequentially along the extension direction of the ear hook 2. The second end 202 is located at the elastic buffer portion 26. At end portions of the elastic buffer portion 26 and the connection body 20 where the elastic buffer portion 26 and the connection body 20 are connected, the elastic buffer portion 26 and the connection body 20 may transit smoothly along the extension direction of the ear hook 2, thereby enhancing the aesthetics and the connection stability of the ear hook 2 while ensuring the wearing comfort. In some embodiments, the circumferential size R2 of the connection body 20 decreases gradually from the end portion connected to the elastic buffer portion 26 to the first end 201. In some embodiments, the circumferential size R2 of the connection body 20 increases gradually, and then decreases gradually from the end portion connected to the elastic buffer portion 26 to the first end 201. In other embodiments, the circumferential size R2 of the connection body 20 at the end portion connected to the elastic buffer portion 26 is a maximum circumferential size of the connection body 20.

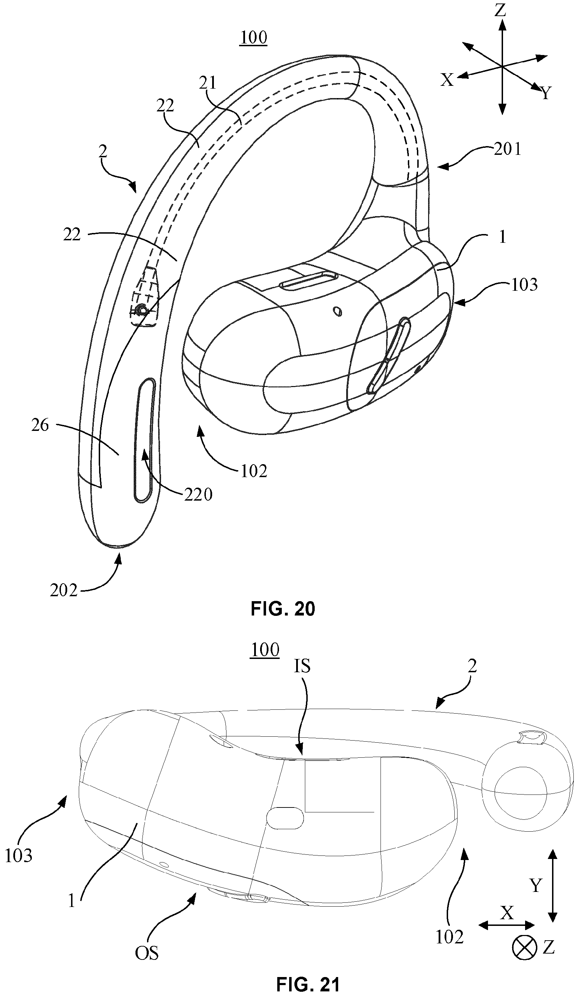

Optionally, as shown in FIG. 20, the connection body 20 includes the elastic framework 21 and the covering member 22. The covering member 22 covers at least a portion of the elastic framework 21, and the elastic buffer portion 26 is connected to the covering member 22. The hardness of the elastic buffer portion 26 is less than the hardness of the covering member 22, and the hardness of the covering member 22 is less than the hardness of the elastic framework 21. The elastic framework 21 provides a main support, so as to maintain the relative shape of the ear hook 2, thereby avoiding the deformation of the ear hook 2 that causes the user to be unable to use the ear hook normally. By disposing the covering member 22 and the elastic buffer portion 26 with successively decreasing hardness, a direct contact between the elastic framework 21 having a higher hardness and the user's ear can be avoided, thereby improving the wearing comfort of the user. Optionally, the ear hook 2 is provided with the buffer cavity 220. For example, the buffer cavity 220 may be provided in the covering member 22 and/or the elastic buffer portion 26. Therefore, the softness and the deformation range of the ear hook 2 can be improved, thereby improving the wearing comfort of the user. More descriptions regarding the buffer cavity may be found in the embodiments described above.

In some embodiments, the covering member 22 covers a portion of the elastic framework 21, and the elastic buffer portion 26 covers another portion of the elastic framework 21. The elastic framework 21 acts as a support of the ear hook 2 and a bridge of the connection, thereby improving the connection stabilization and the reliability of the ear hook 2.

In some embodiments, the covering member 22 and the elastic buffer portion 26 are connected sequentially along the extension direction. The elastic buffer portion 26 does not cover the elastic framework 21, and the elastic buffer portion 26 is located downstream to the elastic framework 21 in the extension direction of the ear hook 2, so that the softness and the deformation range of the elastic buffer portion 26 are not affected. Therefore, the user comfort and the applicability range of the earphone 100 are maximized.

To improve the wearing comfort of the ear hook 2, referring to a third exemplary structure of ear hook 2 below.

Referring to FIGs. 21-24, the ear hook 2 has the first end 201 and the second end 202 opposite to each other, and the first end 201 is connected to the host module 1. The ear hook 2 is hooked to the ear 500 of the user. The ear hook 2 includes the elastic framework 21, the covering member 22, and the fixing block 23, and the elastic framework 21 extends along the extension direction from the first end 201 to the second end 202. The covering member 22 includes the front covering section 221 and the rear covering section 222. The front covering section 221 and the rear covering section 222 are connected to each other in the extension direction. The fixing block 23 is disposed at the end of the elastic framework 21 away from the first end 201. The front covering section 22 covers the elastic framework 21 and the fixing block 23. The rear covering section 222 does not cover the elastic framework 21 and the fixing block 23, and is located downstream to the fixing block 23 in the extension direction. The extension length D2 of the rear covering section 222 along the extension direction is greater than or equal to the extension length D4 of the fixing block 23 along the extension direction. In this way, the covering member 22 being punctured by the elastic framework 21 can be avoided, which facilitates the processing and demolding, and effectively improves the accuracy of the processing.

The host module 1 is used to realize a sound playback. The ear hook 2 may be connected to the host module 1 through the first end 201, so that the host module 1 remains close to or in contact with the ear 500 of the user. The elastic framework 21 may support the covering member 22 within the ear hook 2. The elastic framework 21 may be deformed to a certain degree. The covering member 22 may cover the elastic framework 21, and deform accordingly with the deformation of the elastic framework 21. In this way, the user can adjust the shape of the ear hook 2 by adjusting the shape of the elastic framework 21, so that the ear hook 2 better adapts to the shape of the ear 500 of the user, thereby improving the wearing comfort of the user and the wearing stability of the earphone 100.

By disposing the rear covering section 222 on the basis of disposing the front covering section 221, and disposing the extension length D2 of the rear covering section 222 along the extension direction to be greater than or equal to the extension length D4 of the fixing block 23 along the extension direction, the rear covering section 222 can have a sufficient length along the extension direction, thereby increasing the length of the ear hook 2 along the extension direction, and improving the wearing comfort and stability of the earphone 100. By disposing the rear covering section 222 not cover the elastic framework 21 and the fixing block 23, the rear covering section 222 is not supported by the elastic framework 21 and the fixing block 23. This can reduce a force of the rear covering section 222 on a human ear, thereby improving the wearing comfort of the user. At the same time, the rear covering section 222 is not provided with the elastic framework 21, which reduces a material used for the elastic framework 21, thereby reducing the cost.

If the fixing block 23 is not disposed, there is a risk that the elastic framework 21 having a titanium wire punctures the covering member 22 (e.g., the rear covering section 222) when the rear covering section 222 is elastically bent relative to the front covering section 221. By disposing the fixing block 23 on the end of the elastic framework 21 away from the first end 201, a direct contact between the end of the elastic framework 21 away from the first end 201 and the rear covering section 222 when the rear covering section 222 is bent relative to the front covering section 221 can be reduced, thereby reducing the risk that the end of the elastic framework 21 away from the first end 201 punctures the covering member 22 (e.g., the rear covering section 222) and reducing the wearing discomfort caused by the end of the elastic framework 21 away from the first end 201.

Furthermore, the radial size of the fixing block 23 perpendicular to the extension direction may be greater than the radial size of the end of the elastic framework 21 away from the first end 201 perpendicular to the extension direction. In other words, the circumferential size of the fixing block 23 may be greater than the circumferential size of the elastic framework 21.

Optionally, the material of the covering member 22 is silicone, plastic, or rubber.

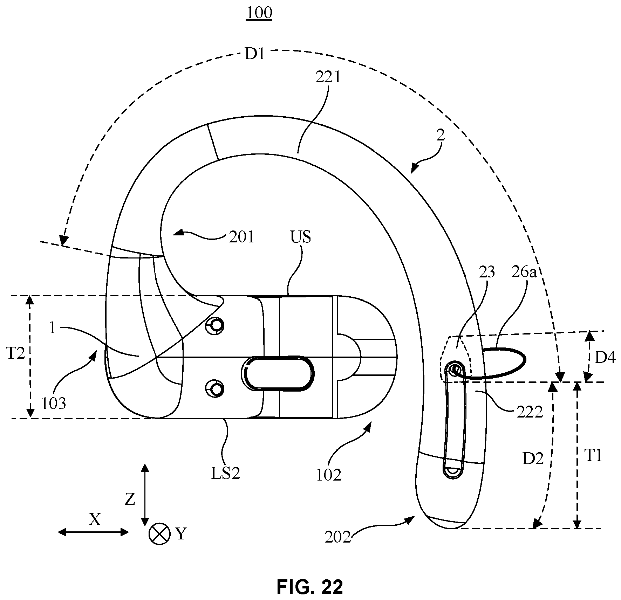

Referring to FIG. 22, in some embodiments, the extension length D2 of the rear covering section 222 along the extension direction is within a range from 10 mm to 25 mm.

According to large model data of a human ear contour, since the front covering section 221 is closer to a hanging position at a rear side of an ear tip (for hanging the ear hook 2), the deviation between the ear hook 2 and the natural contour of the ear may increase as it extends toward the second end 202 of the ear hook 2. Therefore, the rear portion of the ear hook 2 requires greater deformation capability. By disposing the extension length D2 of the rear covering section 222 along the extension direction to be greater than or equal to 10 mm, the rear covering section 222 can have a sufficient length and deformation capacity along the extension direction, thereby well balancing the shape stability (a fatigue resistance) and the comfort performance (an adaptability to a wider range of people) of the ear hook 2. In addition, when the rear covering section 222 is disposed in this way, the fixing block 23 can be ensured not to puncture the covering member 22 of the rear covering section 222.

By disposing the extension length D2 of the rear covering section 222 along the extension direction to be less than or equal to 25 mm, the appearance structure of the earphone 100 can be more concise. Further, the extension length D2 of the rear covering section 222 along the extension direction is within a range from 12mm to 25 mm. For example, the extension length D2 of the rear covering section 222 along the extension direction is 12 mm, 15 mm, 18 mm, 20 mm, or 22 mm.

Optionally, the extension length D1 of the front covering section 221 along the extension direction is within a range from 35 mm to 80 mm.

By disposing the extension length D1 of the front covering section 221 along the extension direction to be greater than or equal to 35 mm, the front covering section 221 can be ensured to have a sufficient length along the extension direction, thereby enhancing the wearing stability of the earphone 100. By disposing the extension length D1 of the front covering section 221 along the extension direction to be less than or equal to 70 mm, the force of the front covering section 221 on the human ear can be reduced, thereby improving the wearing comfort of the earphone 100. At the same time, the material used for the elastic framework 21 can be reduced, thereby reducing the cost. For example, the extension length D1 of the front covering section 221 along the extension direction is 40 mm, 45 mm, 48 mm, 50 mm, 55 mm, 60 mm, 65 mm, or 68 mm.

Optionally, the extension length D4 of the fixing block 23 along the extension direction is within a range from 6 mm to 15 mm. For example, the extension length D4 of the fixing block 23 along the extension direction of the ear hook 2 is 8 mm, 10 mm, or 12 mm. In this way, on the one hand, the fixing block 23 can have a sufficient and reasonable length to cover the end of the elastic framework 21, thereby increasing the difficulty that the elastic framework 21 punctures the covering member 22. This can effectively reduce the probability that the end of the elastic framework 21 punctures the covering member 22, and also improve the fixing effect between the elastic framework 21 and the fixing block 23. On the other hand, the above sizes can improve the fixing effect between the covering member 22 and the fixing block 23 better, so that the covering member 22 can better cover the fixing block 23, thereby improving the fixing effect between the fixing block 23 and the elastic framework 21.

Referring to FIG. 22, in some embodiments, a ratio of the extension length D1 of the front covering section 221 along the extension direction to the extension length D2 of the rear covering section 222 along the extension direction is greater than or equal to 2 and less than or equal to 4.5.

According to the large model data of the human ear contour, since the front covering section 221 is closer to the hanging position at the rear side of the ear tip (for hanging the ear hook 2), the deviation between the ear hook 2 and the natural contour of the ear may increase as it extends toward the second end 202 of the ear hook 2. Therefore, the rear portion of the ear hook 2 requires greater deformation capability. By designing the sizes of the front covering section 221 and the rear covering section 222, the front covering section 221 can be used as a deformation force arm of the rear covering section 222, so that the deformation capacity of the rear covering section 222 is improved, thereby well balancing the shape stability (the fatigue resistance) and the comfort performance (the adaptability to the wider range of people) of the ear hook 2.

For example, the ratio of the extension length D1 of the front covering section 221 along the extension direction to the extension length D2 of the rear covering section 222 along the extension direction is within a range from 2.2 to 2.5, a range from 2.6 to 2.8, or a range from 3.0 to 3.5. Further, the ratio of the extension length D1 of the front covering section 221 along the extension direction to the extension length D2 of the rear covering section 222 along the extension direction is within a range from 3.3 to 3.4.

If the ratio of the extension length D1 of the front covering section 221 along the extension direction to the extension length D2 of the rear covering section 222 along the extension direction is less than 2, the ear hook 2 has a lower wearing stability. If the ratio of the extension length D1 of the front covering section 221 along the extension direction to the extension length D2 of the rear covering section 222 along the extension direction is greater than 4, the wearing comfort of the ear hook 2 is lower. By disposing the ratio of the extension length D1 of the front covering section 221 along the extension direction to the extension length D2 of the rear covering section 222 along the extension direction to be greater than or equal to 2 and less than or equal to 4.5, the ear hook 2 has a good wearing stability and comfort.

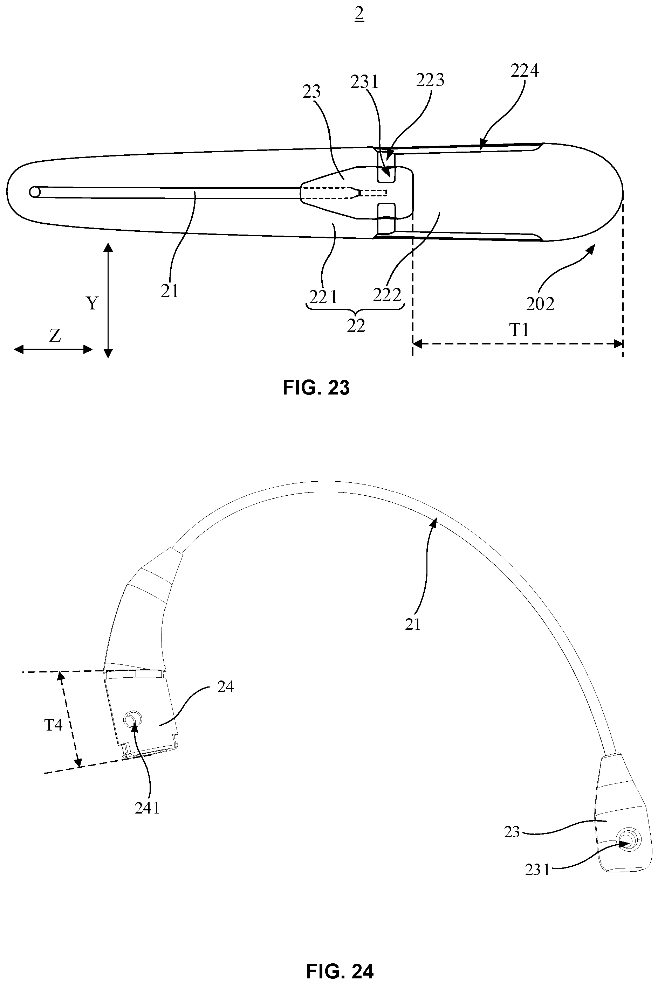

Referring to FIG. 23, in some embodiments, the end of the elastic framework 21 away from the first end 201 is inserted into the fixing block 23.

By inserting the end of the elastic framework 21 away from the first end 201 into the fixing block 23, the fixing block 23 can cover the end of the elastic framework 21 away from the first end 201, which facilitates a stable fixing of the fixing block 23 on the end of the elastic framework 21 away from the first end 201, thereby reducing the damage of the end of the elastic framework 21 away from the first end 201 to the covering member 22, and reducing the wearing discomfort caused by the end of the elastic framework 21 away from the first end 201.

Referring to FIG. 23, in some embodiments, a junction between an end surface of the fixing block 23 facing the rear covering section 222 and a circumferential surface of the fixing block 23 is chamfered or formed as a curved surface. For example, the junction between the fixing block 23 facing the end surface of the rear covering section 222 and the circumferential surface of the fixing block 23 has a curved transition.

The front covering section 221 provides a relatively strong support to the user's ear 500, and the rear covering section 222 provides a relatively weak support to the user's ear 500. By chamfering or disposing a curved surface at the junction between the end surface of the fixing block 23 facing the rear covering section 222 and the circumferential surface of the fixing block 23, the support to the user's ear 500 from the rear covering section 222 and the front covering section 221 at the junction can be flatter, thereby improving the wearing comfort of the user.

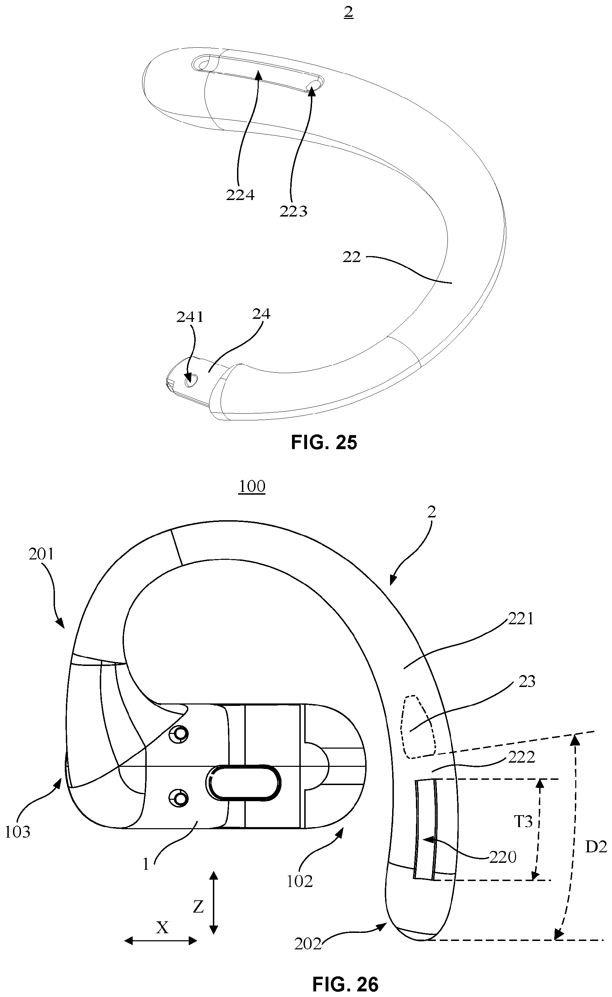

Referring to FIG. 23 and FIG. 25, in some embodiments, the front covering section 221 and/or the rear covering section 222 are provided with the first positioning hole 223, and the fixing block 23 can be exposed through the first positioning hole 223.

In the production process of the ear hook 2, the first positioning hole 223 may avoid the external positioning device, thereby allowing the external positioning device to position the fixing block 23 through the first positioning hole 223. Therefore, the deformation of the elastic framework 21 during the production process of the ear hook 2 can be reduced, thereby improving the accuracy of the shape and positional sizes of the components of the ear hook 2, and the quality yield of the ear hook 2.

The first positioning hole 223 provided in the front covering section 221 allows the external positioning device to act on the circumferential surface of the fixing block 23 or the end surface of the fixing block 23 away from the rear covering section 222. The first positioning hole 223 provided in the rear covering section 222 allows the external positioning device to act on the end surface of the fixing block 23 facing the rear covering section 222. For example, the front covering section 221 and the rear covering section 222 are both provided with the first positioning holes 223, so that the external positioning device acts at different positions of the fixing block 23, thereby improving the fixing effect of the fixing block.

Furthermore, the first positioning holes 223 are provided in pairs in the front covering section 221 and/or the rear covering section 222. The pair of two first positioning holes 223 are disposed opposite to each other, so that opposing sides of the fixing block 23 are exposed through the first positioning holes 223. In this way, the positioning of the fixing block 23 is facilitated, thereby improving the fixing effect of the fixing block 23.

Referring to FIG. 23 and FIG. 25, in some embodiments, the first positioning hole 223 is provided on a circumferential side of the front covering section 221 and/or the rear covering section 222, and the circumferential side of the front covering section 221 and/or the rear covering section 222 is further provided with a recess 224. The first positioning hole 223 is provided on a recess bottom of the recess 224.

On the one hand, the recess 224 can reduce the size of the front covering section 221 and/or the rear covering section 222, and provide the deformation space for the deformation of the front covering section 221 and/or the rear covering section 222. Therefore, the front covering section 221 and/or the rear covering section 222 are easier to deform when subjected to a force, which facilitates the wearing of the user and improves the wearing comfort. On the other hand, the recess 224 enables users to tactually identify the earphone 100, helping them perceive its spatial orientation and position through touch. This allows for correct wearing and operation of the earphone 100 without relying on visual assistance.

Referring to FIG. 23 and FIG. 25, in some embodiments, the first positioning hole 223 is located at one end of the recess 224, and another end of the recess 224 extends in a direction approaching the second end 202.

In this way, the second end 202 and the recess 224 can be tactually sensed by the user simultaneously, which facilitates the user to perceive its spatial orientation and position through touch. At the same time, the recess 224 is located more at the rear covering section 222, which facilitates the rear covering section 222 to deform.

Referring to FIG. 21, FIG. 23, and FIG. 1, in some embodiments, the host module 1 has the length direction X, the width direction Z, and the thickness direction Y perpendicular to each other, and the host module 1 is stacked on the ear 500 along the thickness direction in the wearing state. The first positioning hole 223 extends along the thickness direction Y.

The covering member 22 may cover the elastic framework 21 by injection molding, while the first positioning hole 223 is formed on the covering member 22 by injection molding. By disposing the first positioning holes 223 to extend along the thickness direction Y, during the injection molding process, a mold opening direction coincides with a direction in which a mold disengages from the first positioning hole 223, thereby facilitating the demolding of the covering member 22.

Further, the first positioning hole 223 is provided on the side of the ear hook 2 facing the host module 1 in the wearing state. In this way, it is conducive to shading the first positioning hole 223 by the ear 500 in the wearing state, thereby improving the aesthetic appearance of the earphone 100.

Referring to FIG. 23, optionally, the fixing block 23 is provided with the second positioning hole 231, and the first positioning hole 223 and the second positioning hole 231 are disposed opposite to each other and connected.

By disposing the second positioning hole 231, it is convenient for the external positioning device to position the fixing block 23, thereby improving the fixing effect. For example, the external positioning device positions the fixing block 23 by inserting it into the second positioning hole 231.

Furthermore, the second positioning hole 231 is a blind hole, which facilitates the demolding during the injection molding, and causes the second positioning hole 231 not to penetrate the fixing block 23, so that the fixing block 23 maintains a high strength.

Further, the second positioning holes 231 are provided in pairs. The pair of two second positioning holes 231 are disposed opposite to each other, so that both opposite sides of the fixing block 23 are fixed through the second positioning holes 231. In this way, the positioning of the fixing block 23 is facilitated, thereby improving the fixing effect of the fixing block 23.

Referring to FIG. 22, in some embodiments, the earphone 100 further includes a functional member 26a, and the functional member 26a is detachably connected to the first positioning hole 223. In this way, the aesthetic appearance and functional richness of the earphone 100 can be improved. For example, the user wears the earphone 100 in each of the left and right ears. The functional member 26a may be disposed to detachably connect the two earphones 100 together (e.g., through snap-fit, adhesive, threaded connection, magnetic connection, connection via additional fixing components, etc.), thereby reducing the risk of losing the earphone 100.

Referring to FIG. 22, further, the functional member 26a is a lanyard used to connect the two earphones 100 together. Of course, the functional member 26a may also be an arcuate metal member, and the two functional members 26a are spliced together to form a greater arcuate structure.

In some embodiments, the hardness of the fixing block 23 is greater than the hardness of the covering member 22. By disposing the fixing block 23 to have a greater hardness, a protection effect of the fixing block 23 on the covered member 22 can be improved. By disposing the covering member 22 to have a smaller hardness, the wearing comfort of the user can be improved.

Optionally, the material of the covering member 22 is a softer plastic, the silicone, or the rubber, and the material of the fixing block 23 is a harder plastic or the metal.

Referring to FIG. 22 and FIG. 23, optionally, the front covering section 221 and the rear covering section 222 are integrally molded, and the front covering section 221 covers an outer periphery of the elastic framework 21 and the fixing block 23 in an integrally molded manner. For example, the front covering section 221 and the rear covering section 222 are integrally molded by injection molding.

In this way, the covering member 22 can have a good and uniform covering effect. At the same time, the front covering section 221 and the rear covering section 222 can be stably connected.

Referring to FIG. 22, in some embodiments, the host module 1 includes the connection end 103 connected to the first end 201 of the ear hook 2 and the free end 102 away from the connection end 103, and at least a portion of the rear covering section 222 is disposed opposite to the free end 102. In this way, the portion of the rear covering section 222 and the free end 102 can be located on two sides of a same position of the ear 500 in the wearing state of the earphone 100, respectively. Further, the portion of the rear covering section 222 and the free end 102 can act two equal force arms on the two sides of the same position of the ear 500, thereby improving the wearing comfort.

Referring to FIG. 22, in some embodiments, the host module 1 includes the connection end 103 connected to the first end 201 of the ear hook 2 and the free end 102 away from the connection end 103, and the fixing member is disposed opposite to the free end 102. In this way, the fixing member and the free end 102 can be located on two sides of a same position of the ear 500 in the wearing state of the earphone 100, respectively. Further, the host module 1 and the front covering section 221 can act two equal force arms on the two sides of the same position of the ear 500, thereby improving the wearing stability.

Referring to FIG. 22 and FIG. 1, in some embodiments, the host module 1 has the length direction X, the width direction Z, and the thickness direction Y perpendicular to each other, and the host module 1 is stacked on the ear 500 along the thickness direction Y in the wearing state. A size T1 of the rear covering section 222 along the width direction Z is greater than a size T2 of the host module 1 in the width direction Z.

In this way, the rear covering section 222 can have a sufficient length along the width direction Z, thereby improving the wearing comfort and stability of the earphone 100.

In combination with FIG. 21 and FIG. 22, in some embodiments, the host module 1 has the inner surface IS, the outer surface OS, the upper surface US, and the lower surface LS2. The inner surface IS faces the ear along the thickness direction Y, the outer surface OS is away from the ear along the thickness direction Y, the upper surface US and the lower surface LS2 are connected to the inner surface IS and the outer surface OS. The upper surface US and the lower surface LS2 are spaced apart in the width direction Z. The second end 202 is located at the rear covering section 222, and the rear covering section 222 extends over the lower surface LS2 in the width direction Z.

In this way, the rear covering section 222 has a sufficient length along the width direction Z, thereby improving the wearing comfort of the earphone 100. At the same time, the ear hook 2 can have a sufficient length along the width direction Z, thereby enhancing the wearing stability of the earphone 100.

Referring to FIG. 22, in some embodiments, at least a portion of the fixing block 23 is located between an extension plane of the upper surface US and an extension plane of the lower surface LS2, and the extension length D4 of the fixing block 23 along the extension direction of the ear hook 2 is within a range from 6 mm to 15 mm. For example, a portion of the fixing block 23 is disposed between the extension plane of the upper surface US and the extension plane of the lower surface LS2, and another portion of the fixing block 23 is disposed on a side of the extension plane of the upper surface US close to the first end 201. The extension length D4 of the fixing block 23 along the extension direction of the ear hook 2 is 8 mm, 10 mm, or 12 mm.

In this way, at least a portion of the fixing block 23 and the host module 1 can be located on two sides of a same position of the ear 500 in the wearing state of the earphone 100, respectively. Further, the portion of the fixing block 23 and the host module 1 can act two equal force arms on the two sides of the same position of the ear 500, thereby improving the wearing stability and support. In addition, cooperating with the rear covering section 222 can effectively improve the wearing comfort. The fixing block 23 at one end of the elastic framework 21 extends to a position between the extension plane of the upper surface US and the extension plane of the lower surface LS2, and is disposed to the above sizes. On the one hand, a force arm of the elastic framework 21 and the fixing block 23 as a whole is relatively great relative to the first end 201 of the ear hook 2, so that the elastic framework 21 can deform in a less effort manner when wearing the ear hook 2. From another perspective, the pressure applied on the user's ear can be reducd while maintaining the same clamping effect, thereby improving the wearing comfort. On the other hand, the support can be improved, so that the rear covering section 222 is adhered to the human ear more tightly, thereby improving the wearing comfort through the buffer ability.

Referring to FIG. 26, in some embodiments, the rear covering section 222 is provided with the buffer cavity 220, and at least a portion of the buffer cavity 220 is located at a portion of the rear covering section 222 disposed opposite to the free end 102.

The portion of the buffer cavity 220 and the free end 102 can be located on two sides of a same position of the ear 500 in the wearing state of the earphone 100, respectively. Further, the portion of the rear covering section 222 and the free end 102 can act the two equal force arms on the two sides of the same position of the ear 500, thereby improving the wearing comfort. The buffer cavity 220 can reduce the size of the rear covering section 222, and provide the deformation space for the rear covering section 222 to deform, so that the rear covering section 222 can deform more easily when subjected to force to adapt to the shape of the ear 500. Therefore, the force that the free end 102 and the rear covering section 222 apply to the ear 500 can be reduced, which facilitates the user wearing the earphone 100 and improves the wearing comfort.

Referring to FIG. 1 and FIG. 26, in some embodiments, the free end 102 extends into the concha cavity 502 of the ear 500 in the wearing state, the free end 102 and the rear covering section 222 are disposed to jointly clamp a region of the ear 500 (also referred to an ear region) from a front side and a rear side of the region of the ear 500 corresponding to the concha cavity 502 in the wearing state, and the buffer cavity 220 is located in a portion of the rear covering section 222 for clamping the region of the ear 500.

By extending the free end 102 into the concha cavity 502 of the ear 500 in the wearing state, a reception of sound from the earphone 100 by the ear is facilitated. The portion of the buffer cavity 220 and the free end 102 are disposed on the front side and the rear side of the region of the ear 500 corresponding to the concha cavity 502 in the wearing state of the earphone 100, respectively, such that the portion of the rear covering section 222 and the free end 102 can act the two equal force arms on the two sides of the same position of the ear 500. The buffer cavity 220 can reduce the size of the rear covering section 222, and provide the deformation space for the rear covering section 222 to deform, so that the rear covering section 222 can deform more easily when subjected to force to adapt to the shape of the ear 500. Therefore, the force that the free end 102 and the rear covering section 222 apply to the ear 500 can be reduced, which facilitates the user wearing the earphone 100 and improves the wearing comfort.

Referring to FIG. 22, in some embodiments, the buffer cavity 220 is configured as an elongated through-hole or a recess, and a ratio of an extension length T3 of the buffer cavity 220 along the extension direction to the extension length D2 of the rear covering section 222 along the extension direction is greater than or equal to 1/2 and less than or equal to 4/5. For example, the ratio of the extension length T3 of the buffer cavity 220 along the extension direction to the extension length D2 of the rear covering section 222 along the extension direction is within a range from 0.6 to 0.7. As another example, the ratio of the extension length T3 of the buffer cavity 220 along the extension direction to the extension length D2 of the rear covering section 222 along the extension direction is 2/3.

In this way, the buffer cavity 220 can provide the sufficient deformation space for the rear covering section 222, while the rear covering section 222 can maintain a good support performance. By disposing the buffer cavity 220, a tactile recognition can be used to remove and wear the earphone 100 through the buffer cavity 220.

In combination with FIG. 24 and FIG. 25, in some embodiments, the ear hook 2 further includes the connector 24 fixedly disposed at the end of the elastic framework 21 close to the first end 201, and the connector 24 is fixedly connected and fixed to the host module 1. An extension length T4 of the connector 24 along the extension direction is greater than the extension length D4 of the fixing block 23 along the extension direction.

By disposing the connector 24, the assembly of the ear hook 2 and the host module 1 is facilitated. For example, through the connector 24, the ear hook 2 and the host module 1 can be snap connected. By disposing the extension length T4 of the connector 24 along the extension direction to be greater than the extension length **D4** of the fixing block 23 along the extension direction, the connection stability of the ear hook 2 and the host module 1 can be improved. In addition, in this way, a shape precision of the outer periphery of the connector 24 close to the end of the host module 1 can be increased when the ear hook 2 is injection molded, thereby improving a product consistency of the overall ear hook 2.

Referring to FIG. 22, FIG. 24, and FIG. 25, in some embodiments, the elastic framework 21 is inserted into the connector 24, and a circumferential side of the connector 24 is provided with a third positioning hole 241. The host module 1 has the length direction X, the width direction Z, and the thickness direction Y perpendicular to each other, and the host module 1 is stacked on the ear 500 along the thickness direction Y in the wearing state. The third positioning hole 241 extends along the thickness direction Y.

By disposing the third positioning hole 241, it is convenient for the external positioning device to position the connector 24 during the production process of the ear hook 2. Therefore, the deformation of the elastic framework 21 during the production process of the ear hook 2 can be reduced, improving the accuracy of the shape and positional sizes of the components of the ear hook 2, and the quality yield of the ear hook 2.

The connector 24 may be molded by injection molding, while the third positioning hole 241 is molded to the connector 24 by injection molding. By disposing the third positioning hole 241 to extend along the thickness direction Y, during the injection molding process, a mold opening direction coincides with a direction in which a mold disengages from the third positioning hole 241, thereby facilitating the demolding of the connector 24.

Furthermore, the third positioning hole 241 is the blind hole, which facilitates the demolding during the injection molding, and cause the third positioning hole 241 not to penetrate the fixing block 23, so that the fixing block 23 maintains a high strength

In some embodiments, as shown in FIG. 14 and FIG. 15a, the host module 1 has the length direction X, the width direction Z, and the thickness direction Y perpendicular to each other. The host module 1 is stacked on the ear along the thickness direction Y in the wearing state. The extension direction of the end of the elastic framework 21 close to the first end 201 and the length direction X have the first angle Q1 facing the ear hook 2. The extension direction of the connector 24 and the length direction X have the second angle Q2 facing the ear hook 2. The first angle Q1 is smaller than the second angle Q2.

Either the earphone 100 or other electronic devices 300 (e.g., computers, cell phones, tablets, etc.) are provided with a charging interface, a data transmission interface, or a combination thereof. Exemplary descriptions regarding the interface of the electronic device 300 are illustrated below.

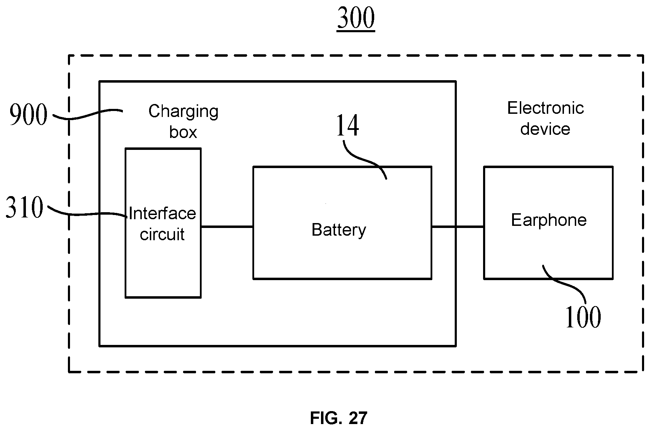

As shown in FIG. 27, the electronic device 300 may include the battery 14 and an interface circuit 310. The interface circuit 310 couples to the battery 14, so that an external charging device charges the battery 14 via the interface circuit 310. The electronic device 300 may be a device such as a cell phone, a computer, an earphone device, etc. The external charging device may be a device such as a rechargeable battery, a charging pile, etc. that is capable of outputting power to the electronic device 300 via the interface circuit 310.

In some embodiments, as shown in FIG. 7, FIG. 8, and FIG. 27, the electronic device 300 may include the charging case 900 and the earphones 100. The charging case 900 accommodates the earphones 100 and is used to charge the earphones 100. The interface circuitry 310 may be disposed within the charging case 900, so that the external charging device charges the charging case 900 via the interface circuitry 310. Therefore, the charging case 900 may obtain the power from the external charging device, and charge the earphones 100 when the earphones 100 are accommodated in the charging case 900.

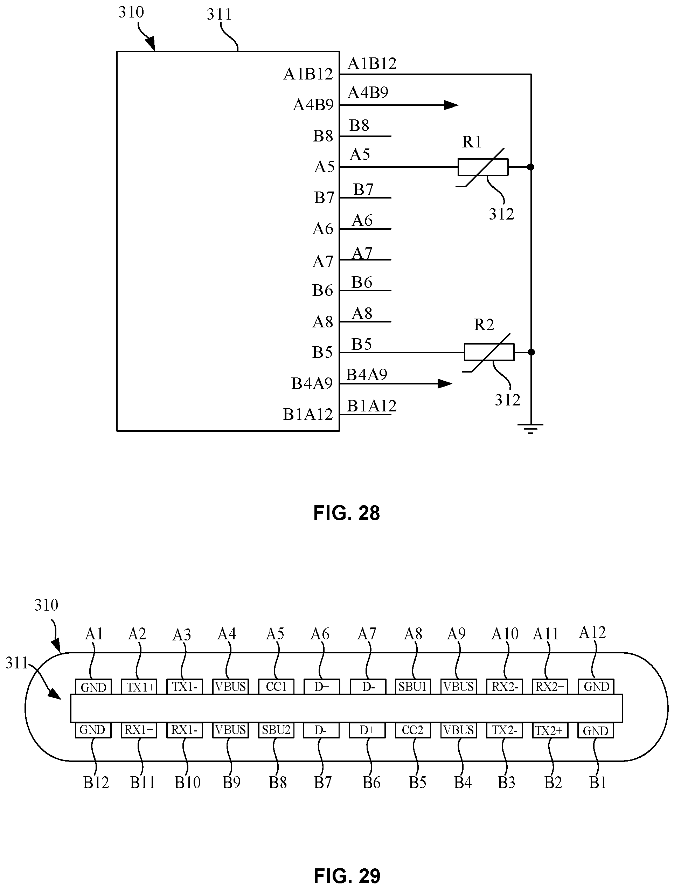

In some embodiments, as shown in FIG. 28, the interface circuit 310 may include a power receiving interface 311 and a preset thermistor 312. The power receiving interface 311 may include an identification pin A5 (B5). The identification pin A5 (B5) may be used for an external charging device to detect a coupling state between the interface circuit 310 and the external charging device when the interface circuit 310 is coupled with the external charging device, and to continuously transmit the coupling state to the external charging device. Therefore, the external charging device can obtain the coupling state between the interface circuit 310 and the external charging device in real time, and react timely according to the detected coupling state, thereby avoiding safety accidents. In some embodiments, the external charging device is configured to intermittently detect the coupling state between the interface circuit 310 and the external charging device. For example, the external charging device detects the coupling state every 5 seconds (s) or 10 s, thereby reducing the energy consumption of the external charging device and the electronic device 300.

The preset thermistor 312 may be configured to change the coupling state of the interface circuit 310 as detected by the external charging device with a temperature change of the power receiving interface 311. As shown in FIG. 28, the preset thermistor 312 may be coupled to the identification pin A5 (B5). The preset thermistor 312 further changes the coupling state between the interface circuit 310 and the external charging device based on the temperature of the power receiving interface 311 after detecting the temperature change of the power receiving interface 311. The coupling state is transmitted to the external charging device via the identification pin A5 (B5). By disposing the preset thermistor 312 and the identification pin A5 (B5) connected to the preset thermistor 312 in the interface circuit 310, the electronic device 300 may monitor the temperature of the power receiving interface 311 timely when the electronic device 300 is connected to the external charging device for charging through the interface circuit 310. Therefore, the electronic device 300 can obtain the coupling state between the interface circuit 310 and the external charging device in real time, and further react more sensitively according to the detected coupling state. In this way, the electronic device 300 can be protected timely, thereby avoiding the safety accident as much as possible.

In some embodiments, the power receiving interface 311 is a Type-C interface and the identification pin A5 (B5) is a configuration channel (CC) pin. For instance, the Type-C interface is an interface form standard of universal serial bus (USB) with a smaller size than a Type-A interface and a Type-B interface. The Type-C interface is an interface type that is applied to both a personal computer (PC) (i.e., a master device) and an external device (i.e., a sub-device, such as a cellular phone, the earphone 100, or the charging case 900). The CC pin is primarily used to identify a type of a device inserted into the power receiving interface 311 and for communication, and is also used to determine a direction of data transmission and forward and reverse insertion directions. In some embodiments, by disposing the CC pin connected to the preset thermistor 312, the external charging device can be caused to receive data information relating to the coupling state directly through the CC pin, thereby improving an efficiency of the external charging device in determining the coupling state between the interface circuit 310 and the external charging device, saving internal component(s) and the space of the interface circuit 310, and improving a space utilization of the interface circuit 310.

Of course, in other embodiments, the power receiving interface 311 may be other interfaces such as the Type-A interface, the Type-B interface, etc., and the identification pin A5 (B5) may be other pins such as a VBUS pin.

In some embodiments, a resistance value of the preset thermistor 312 may change with the temperature of the power receiving interface 311, so that the external charging device detects the coupling state based on the resistance value of the preset thermistor 312 through the identification pin A5 (B5). The preset thermistor 312 may specifically be a sensor resistor, which is typically characterized by a resistance value that changes along with the change of the temperature. That is, the resistance value is different at different temperatures. Therefore, the resistance value of the preset thermistor 312 can directly reflect the temperature change of the power receiving interface 311. By disposing the external charging device to directly detect the coupling state between the external charging device and the interface circuit 310 based on the resistance value of the preset thermistor 312, the accuracy of the coupling state obtained by the external charging device can be improved.

In some embodiments, the identification pin A5 (B5) is grounded via the preset thermistor 312. For instance, the preset thermistor 312 is disposed between the identification pin A5 (B5) and the ground. When the external charging device is connected to the power receiving interface 311, if the temperature of the preset thermistor 312 is too high resulting in the resistance value of the preset thermistor 312 being too high, the preset thermistor 312 may block the connection between the identification pin A5 (B5) and the ground. The resistance value of the preset thermistor may appear to tend to infinity to disconnect the external charging device and the ground, so that the external charging device can determine the coupling state with the interface circuit 310 by connecting to the ground. Moreover, the preset thermistor 312 is directly connected to the identification pin A5 (B5), so that the preset thermistor 312 directly detects and reflects the temperature change of the power receiving interface 311 without being easily affected by other circuit components, thereby more accurately transmitting information about the coupling state between the interface circuit 310 and the external charging device to the external charging device.

In some embodiments, the preset thermistor 312 may be set as that the coupling state detected by the external charging device is normal when the resistance value of the preset thermistor 312 is within a preset resistance range, and the coupling state detected by the external charging device is abnormal when the resistance value of the preset thermistor 312 is not within a preset resistance range.

The preset resistance range may be set with reference to a temperature tolerance threshold of the power receiving interface 311 in a normal operation, so that the preset resistance range characterizes a normal operation temperature of the power receiving interface 311 when coupled to the external charging device.

When the resistance value of the preset thermistor 312 is located within the preset resistance range, it indicates that the temperature of the power receiving interface 311 is normal. At such normal temperature, the power receiving interface 311 can maintain normal power supply and communication with the external charging device, and other functions, which further indicates that the external charging device detects that the coupling state between the power receiving interface 311 and the external charging device is normal.

When the resistance value of the preset thermistor 312 is not within the preset resistance range, it indicates that the temperature of the power receiving interface 311 detected by the preset thermistor 312 is at a too high temperature. The power receiving interface 311 at the too high temperature affects the normal power supply or communication with the external charging device, and other functions. Therefore, the coupling state detected by the external charging device at this time is abnormal.

For example, the preset resistance range is within a range from 4.9 kil-Ohm (KΩ) to 5.3 KΩ. When the resistance value of the preset thermistor 312 is located within the range from 4.9 kil-Ohm (KΩ) to 5.3 KΩ, the coupling state detected by the external charging device is normal. When the resistance value of the preset thermistor 312 is less than 4.9 KΩ or greater than 5.2 KΩ, the coupling state detected by the external charging device is abnormal. Of course, in other embodiments, the preset resistance range may be other values. For example, if a thermistor with a different specification is used, the preset resistance range is another resistance range corresponding to the thermistor. For example, the preset resistance range may be a range from 4.9 KΩ to 5.2 KΩ, a range from 5 KΩ to 5.5 KΩ, or other resistance ranges, which is not limited herein.

By disposing the preset resistance range of the preset thermistor 312, and detecting whether the real-time resistance value of the preset thermistor 312 is within the preset resistance range to reflect the coupling state between the power receiving interface 311 and the external charging device, the accuracy of the detection result obtained by the external charging device can be improved, thereby improving a safety of the interface circuit 310.

In some embodiments, a nominal resistance value of the preset thermistor 312 is within a range from 4.8K Ω to 5.4 KΩ. In this way, the preset thermistor 312 can detect a wider operation temperature range, which improve the sensitivity of the preset thermistor 312, thereby improving the detection accuracy of the power receiving interface 311 on the external charging device more accurate. In other embodiments, according to the different specification of the thermistor, the nominal resistance value of the preset thermistor 312 may be other resistors corresponding to the thermistor. For example, the nominal resistance value of the preset thermistor 312 may be within a range from 4.5 KΩ to 5.5 KΩ, a range from 4.9 KΩ to 5.3 KΩ, or other resistance ranges, which is not limited herein.

In some embodiments, the preset thermistor 312 may be set as that when the temperature of the power receiving interface 311 is within the preset temperature range, the resistance value of the preset thermistor 312 is located within the preset resistance range, and when the temperature of the power receiving interface 311 is not within the preset temperature range, the resistance value of the preset thermistor 312 is not located within the preset resistance range.

For instance, the preset temperature range may be referred to a normal temperature of the power receiving interface 311 when the power receiving interface 311 is coupled to the external charging device and operates (e.g., supplies power, communicates, etc.) normally, and the preset resistance range may be configured to correspond to the preset temperature range. Therefore, if the temperature of the power receiving interface 311 is within the preset temperature range, the resistance value of the preset thermistor 312 is within the preset resistance range, and thus the coupling state detected by the external charging device is normal. If the temperature of the power receiving interface 311 is not within the preset temperature range, the resistance value of the preset thermistor 312 is not within the preset resistance range, and thus the coupling state detected by the external charging device is abnormal.

In some embodiments, if the power receiving interface 311 normally operates (e.g., supplies power, communicates, etc.) with the external charging device when the preset temperature range is located within a range from 0 degrees centigrade (°C) to 45° C, the operation temperature of the power receiving interface 311 may be set within the range from 0 °C to 45° C, and the preset resistance range corresponding to the preset temperature range may be set within the range from 4.9 KΩ to 5.3 KΩ. When the external charging device detects that the coupling state is normal, it indicates that the temperature of the power receiving interface 311 is located within the preset temperature range from 0 °C to 45° C, the resistance value of the preset thermistor 312 is located within the range from 4.9 KΩ to 5.3 KΩ, and the power receiving interface 311 is in the normal operation state. When the power receiving interface 311 is greater than 45°C, the power receiving interface 311 is not suitable for receiving power supply or communicating with the external charging device, the resistance value of the preset thermistor 312 exceeds the preset resistance range (e.g., less than 4.9 KΩ or greater than 5.3 KΩ), and the coupling state detected by the external charging device is abnormal. In some embodiments, if a maximum temperature that the power receiving interface 311 is able to withstand is 80 °C, the preset temperature range is set as a range from 0 °C to 75 °C. At this time, if the temperature of the power receiving interface 311 exceeds the preset temperature range, the resistance value of the preset thermistor 312 approaches zero or infinity, and the coupling state detected by the external charging device is abnormal.

Of course, in other embodiments, the preset temperature range may also be other values, and the preset resistance range corresponding to the preset temperature range may also be other values, which are not limited herein.

In the above embodiments, the preset resistance range is set according to the normal operation temperature range of the power receiving interface 311, and the coupling state between the power receiving interface 311 and the external charging device is obtained based on the preset resistance range, so that the temperature of the power receiving interface 311 is monitored by the external charging device, and the abnormal condition of the electrified interface 311 is obtained timely and a timely response is performed, thereby improving the operation safety of the interface circuit 310.

In some embodiments, as shown in FIG. 29, the power receiving interface 311 may include a power supply pin A4 (B4). The power supply pin A4 (B4) may be used to receive a charging voltage output from the external charging device when the interface circuit 310 is coupled to the external charging device. The external charging device stops outputting the charging voltage to the power supply pin A4 (B4) when the coupling state is detected as abnormal.

In some embodiments, the power supply pin A4(B4) may be a Voltage bus (VBUS) pin capable of being connected to a pin that outputs a voltage in the external charging device when the external charging device is coupled to the receiving electrical interface 311. Therefore, the power supply pin A4(B4) can receive the charging voltage output by the external charging device, so that the external charging device charges the electronic device 300 via the power supply pin A4(B4).

For instance, when the external charging device detects that the coupling state is abnormal, it may indicate that the temperature of the power receiving interface 311 exceeds the preset temperature range, and the temperature of the power receiving interface 311 is too hot or too cold. At this time, the external charging device stops outputting the charging voltage to the power supply pin A4 (B4), thereby protecting the power receiving interface 311 and avoiding the safety accident as much as possible.

In some embodiments, as shown in FIG. 29, there may be two identification pins A5 (B5) and two preset thermistors 312, and the two identification pins A5 (B5) and the two preset thermistors 312 are in a one-to-one correspondence.

By disposing the two identification pins A5 (B5), the functions of power supply and communication between the power receiving interface 311 and the external charging device can be improved. By disposing the two preset thermistors 312, a double detection can be performed on the temperature of the power receiving interface 311, thereby improving the accuracy of the temperature of the power receiving interface 311 detected by the external charging device.

In some embodiments, as shown in FIG. 29, there may be two power supply pins A4 (B4) including a first power supply pin A4 (B4) and a second power supply pin A4(B4).

In some embodiments, as shown in FIG. 29, the power receiving interface 311 may also include grounding pins, receiving pins, transmitting pins, arbitrary connecting pins, and auxiliary pins.

The grounding pins may be used to connect to a grounding wire. For example, the grounding pins may be ground (GND) pins. Optionally, there may be four grounding pins, and the four grounding pins include a first grounding pin A1, a second grounding pin A12, a third grounding pin B1, and a fourth grounding pin B12.

The transmitting pins may include positive transmitting pins and negative transmitting pins. There may be two positive transmitting pins and two negative transmitting pins. The positive transmitting pins include a first positive transmitting pin A2 and a second positive transmitting pin B2, and the negative transmitting pins include a first negative transmitting pin A3 and a second negative transmitting pin B3. The transmitting pins are used to transmit data at a high speed. After the external device is coupled to the power receiving interface 311, the transmitting pins are used to send the transmitted data at the high speed to the external device.

The receiving pins may include positive receiving pins and negative receiving pins. There may be two positive receiving pins and two negative receiving pins. The positive receiving pins include a first positive receiving pin A10 and a second positive receiving pin B10, and the negative receiving pin includes a first negative receiving pin A11 and a second negative receiving pin B11. After the external device is coupled to the power receiving interface 311, the receiving pins are used to receive the transmitted data from the external device at the high speed.

The arbitrary connecting pins may also include positive arbitrary connecting pins and negative arbitrary connecting pins. For example, the positive arbitrary connecting pins are D+ pins, and the negative arbitrary connecting pins are D- pins. There may also be two positive arbitrary connecting pins and two negative arbitrary connecting pins. The positive arbitrary connecting pins include a first positive arbitrary connecting pin A6 and a second positive arbitrary connecting pin B6, and the negative arbitrary connecting pins include a first negative arbitrary connecting pin A7 and a second positive arbitrary connecting pin B7. The arbitrary connecting pins are used to transmit two groups of signals of USB 2.0. The positive arbitrary connecting pins and the negative arbitrary connecting pins are cross connected, so that the data is communicated when the external device is connected in any direction.

The auxiliary pins are used to assist the power receiving interface 311 and the external charging device in transmitting auxiliary signals in some special modes. The auxiliary pins may be SBU pins. There may be two auxiliary pins including a first auxiliary pin A8 and a second auxiliary pin B8.

The above descriptions are only a portion of embodiments of the present disclosure, and are not intended to limit the scope of the present disclosure. Any equivalent device or equivalent process transformed using the contents of the specification of the present disclosure and the accompanying drawings, or directly or indirectly applied in other related technical fields, are all included in the scope of the present disclosure.

## Claims

1. An earphone, comprising:
a host module; and
an ear hook, the ear hook including a first end and a second end disposed opposite to each other, the first end being connected to the host module, and the ear hook being configured to be hooked on a user's ear, wherein
the ear hook includes an elastic framework, a covering member, and a fixing block,
the elastic framework extends along an extension direction from the first end to the second end,
the covering member includes a front covering section and a rear covering section, the front covering section and the rear covering section being connected to each other in the extension direction,
the fixing block is disposed at one end of the elastic framework away from the first end,
the front covering section covers the elastic framework and the fixing block,
the rear covering section does not cover the elastic framework and the fixing block, and is located downstream to the fixing block in the extension direction, and
an extension length of the rear covering section along the extension direction is greater than or equal to an extension length of the fixing block along the extension direction.

2. The earphone of claim 1, wherein
the extension length of the rear covering section along the extension direction is within a range from 10 millimeters (mm) to 25 mm; and/or
an extension length of the front covering section along the extension direction is within a range from 35 mm to 80 mm; and/or
the extension length of the fixing block along the extension direction is within a range from 6 mm to 15 mm.

3. The earphone of claim 1 or 2, wherein
a ratio of an extension length of the front covering section along the extension direction to the extension length of the rear covering section along the extension direction is greater than or equal to 2 and less than or equal to 4.5.

4. The earphone of claim 1, wherein
the end of the elastic framework away from the first end is inserted into the fixing block.

5. The earphone of claim 4, wherein
a junction between an end surface of the fixing block facing the rear covering section and a circumferential surface of the fixing block is chamfered or formed as a curved surface.

6. The earphone of claim 1, wherein
at least one of the front covering section or the rear covering section is provided with a first positioning hole, and the fixing block is exposed through the first positioning hole.

7. The earphone of claim 6, wherein
the first positioning hole is disposed on a circumferential side of the at least one of the front covering section or the rear covering section,
the circumferential side of the at least one of the front covering section or the rear covering section is further provided with a recess, the first positioning hole being disposed on a recess bottom of the recess.

8. The earphone of claim 7, wherein
the first positioning hole is disposed at an end of the recess, and another end of the recess extends in a direction approaching the second end.

9. The earphone of claim 6, wherein
the host module has a length direction, a width direction, and a thickness direction perpendicular to each other, the host module is stacked on the ear along the thickness direction in a wearing state, and the first positioning hole extends along the thickness direction; and/or
the fixing block is provided with a second positioning hole, and the first positioning hole and the second positioning hole are disposed opposite to each other and connected.

10. The earphone of claim 6, wherein
the earphone further includes a functional member detachably connected to the first positioning hole.

11. The earphone of claim 1, wherein
a hardness of the fixing block is greater than a hardness of the covering member; and/or
the front covering section and the rear covering section are integrally molded, and the front covering section is integrally molded over the elastic framework and the fixing block to cover their outer peripheries.

12. The earphone of claim 1, wherein
the host module includes a connection end connected to the first end of the ear hook and a free end away from the connection end, and at least a portion of the rear covering section is disposed opposite to the free end.

13. The earphone of claim 12, wherein
the host module has a length direction, a width direction, and a thickness direction perpendicular to each other, the host module is stacked on the ear along the thickness direction in a wearing state, and a size of the rear covering section along the width direction is greater than a size of the host module along the width direction.

14. The earphone of claim 13, wherein
in the wearing state, the host module has an inner surface, an outer surface, an upper surface, and the lower surface, the inner surface faces the ear along the thickness direction, the outer surface is away from the ear along the thickness direction, the upper surface and the lower surface are connected to the inner surface and the outer surface, the upper surface and the lower surface are spaced apart in the width direction;
the second end is located at the rear covering section, and the rear covering section extends across the lower surface in the width direction.

15. The earphone of claim 14, wherein
at least a portion of the fixing block is located between an extension plane of the upper surface and an extension plane of the lower surface, and an extension length of the fixing block along the extension direction of the ear hook is within a range from 6 mm to 15 mm.

16. The earphone of claim 12, wherein
the rear covering section is provided with a buffer cavity, and at least a portion of the buffer cavity is located in a portion of the rear covering section disposed opposite to the free end.

17. The earphone of claim 16, wherein
the free end extends into a concha cavity of the ear in a wearing state,
the free end and the rear covering section are disposed to jointly clamp an ear region from a front side and a rear side of the ear region corresponding to the concha cavity in the wearing state, and
the buffer cavity is located in a portion of the rear covering section for clamping the ear region.

18. The earphone of claim 16, wherein
the buffer cavity is configured as an elongated through-hole or a recess, and a ratio of an extension length of the buffer cavity along the extension direction to the extension length of the rear covering section along the extension direction is greater than or equal to 1/2 and less than or equal to 4/5.

19. The earphone of claim 1, wherein
the ear hook further includes a connector fixedly disposed at an end of the elastic framework close to the first end, and the connector is connected and fixed to the host module,
an extension length of the connector along the extension direction is greater than the extension length of the fixing block along the extension direction.

20. The earphone of claim 19, wherein
the elastic framework is inserted into the connector, and a circumferential side of the connector is provided with a third positioning hole;
the host module has a length direction, a width direction, and a thickness direction perpendicular to each other, and the host module is stacked on the ear along the thickness direction in a wearing state; and
the third positioning hole extends along the thickness direction.

21. The earphone of claim 19, wherein
the host module has a length direction, a width direction, and a thickness direction perpendicular to each other, the host module is stacked on the ear along the thickness direction in a wearing state;
an extension direction of one end of the elastic framework close to the first end and the length direction has a first angle facing the ear hook, and an extension direction of the connector and the length direction has a second angle facing the ear hook;
the first angle is less than the second angle, the first angle is within a range from 70 degrees to 110 degrees, and the second angle is within a range from 90 degrees to 130 degrees.
